# EUROPEAN PATENT APPLICATION

(11) **EP 3 229 127 A1**
(43) Date of publication of application: **11.10.2017**
(21) Application number: 17164041.0
(22) Date of filing: 31.03.2017
(51) Int. Cl.: G06F 3/12

(54) **PRINTER, PRINTING METHOD, AND IMAGE PROCESSING DEVICE**

(30) Priority: 31.03.2016 JP 2016073404; 31.03.2016 JP 2016073425; 28.03.2017 JP 2017062044
(71) Applicant: Funai Electric Co., Ltd., Daito, Osaka, 574-0013 (JP)
(72) Inventor: MISHIMA, Hideki, Osaka, 574-0013 (JP)
(74) Representative: Vigand, Philippe

(57) **Abstract**

A printer 100 includes a control unit 101 and a printing unit 105. The control unit 101 determines whether a portion of the print image referred to as a target region is blank. The printing unit 105 cancels printing of the print image when the control unit 101 determines that the target region is blank.

## Description

### Field

The present invention relates to a printer, a printing method, and an image processing device related thereto that can cancel the printing of a print image in accordance with the print image.

### Background

Conventionally, a technique of canceling the printing of a print image that is devoid of text or an image when printing a plurality of print images representing, for example, a multiple page document or multiple illustrations has been proposed. For example, in Patent Literature (PTL) 1, when an electronic file includes blank page information, an inquiry is made regarding whether to print the job including the blank page. Here, when instruction is made to not print the job while the job includes the blank page, the blank page is excluded from the job and the job is printed.

### Citation List

### Patent Literature

**[PTL 1]** Japanese Unexamined Patent Application Publication No. 2012-186862
**[PTL 2]** Japanese Unexamined Patent Application Publication No. 2007-081887

### Summary

### Technical Problem

However, with the above conventional technique, there are instances where printing of a print image essentially devoid of useful information is carried out without being canceled.

In light of this, the present invention provides a printer capable of efficiently reducing wasteful printing.

### Solution to Problem

The printer according to one aspect of the present invention includes: a control unit that determines whether a target region of a print image is blank, the target region being a portion of the print image; and a printing unit that cancels printing of the print image when the control unit determines that the target region is blank.

With this, it is possible to cancel printing of a print image in accordance with a determination result of whether a region (target region), which is a portion of the print image, is blank. Therefore, when the print image includes information only outside of the target region, the printing of the print image can be canceled. For example, when the print image is design documentation created using a standard format, there are instances where all design documentation includes shared information in a predetermined region. In such a case, by using a region other than the predetermined region including such shared information as the target region, it is possible to cancel the printing of a print image that includes only the shared information and thus efficiently reduce wasteful printing.

For example, the printer may further include a display unit that displays the target region along with the print image, and control unit may modify the displayed target region.

With this, the target region can be displayed along with the print image. Therefore, the user can visually check the print image and the target region, making it possible to modify the target region in a manner suitable for the print image and thus efficiently reduce wasteful printing even further.

For example, the display unit may further display candidate target regions, and the control unit may further select the target region from among the displayed candidate target regions.

With this, it is possible to select a target region from among candidate target regions. Thus, the user can easily select a target region from among candidate target regions.

For example, the display unit may display the candidate target regions along with the print image.

With this, the candidate target regions can be displayed along with the print image. Therefore, the user can visually check the print image and the candidate target regions, making it possible to select a target region suitable for the print image and thus efficiently reduce wasteful printing even further.

For example, the display unit may prioritize displaying a candidate target region frequently selected from among the candidate target regions.

With this, display of a frequently selected target region among the candidate target regions can be prioritized. Accordingly, the user can efficiently select a target region.

For example, the control unit may further: detect blank regions in a plurality of the print images; and select the target region from among the blank regions.

With this, it is possible to select a target region from among blank regions detected in print images. Therefore, when the print images include a print image that should not be printed, it is possible to select a target region appropriate for that print image. It is further possible to efficiently reduce wasteful printing by applying the target region selected in this manner to other print images.

For example, the control unit may determine whether the target region is blank by comparing a surface area size of a blank region detected in the target region with a threshold surface area size.

With this, it is possible to determine whether the target region is blank by comparing the surface area size of the blank region detected in the target region with a threshold surface area size. Therefore, when, for example, the target region includes pixels having erroneous density values (i.e., error pixels), it is possible to prevent the execution of printing caused only by such error pixels. In other words, resistance to error can be improved and wasteful printing can be further efficiently reduced.

For example, the printer may further include a display unit that displays the threshold surface area size along with the print image, and the control unit may modify the displayed threshold surface area size.

With this, the threshold surface area size can be displayed along with the print image. Therefore, the user can visually check the print image and the threshold surface area size, making it possible to modify the threshold surface area size in a manner suitable for the print image and thus efficiently reduce wasteful printing even further.

For example, the printer may further include a display unit that displays information indicating the print image when the control unit determines that the target region is blank.

With this, information indicating the print image can be displayed when the target region of the print image is determined to be blank. In other words, when printing of the print image is canceled, a notification of the canceling of the print image can be presented to the user. Therefore, when the printing of a print image that should be printed is canceled, the user can reprint the print image or reset the target region in accordance with the displayed information.

For example, the information indicating the print image may include at least one of a date and time at which the printing of the print image was canceled and a page number of the print image.

With this, the information indicating the print image can include at least one of the date and time at which the printing of the print image was canceled and the page number of the print image. Therefore, the user can easily confirm which print images were canceled.

For example, the printer may further include an image processing unit that processes the print image. The image processing unit may include: an identifying unit that identifies a blank region in each pixel line included in the print image based on a density level of each pixel included in the pixel line; a coupling unit that couples adjacent blank regions among the blank regions identified in the pixel lines; and an output unit that outputs information on a blank region in the print image based on a coupling result by the coupling unit. The pixel lines may include a first pixel line including, in the listed order, a first pixel, a second pixel, and a third pixel adjacent to the second pixel. The identifying unit may: identify a position of the first pixel as a start position of the blank region in the first pixel line when the density level of the first pixel is less than a threshold level; and identify a position of the second pixel as an end position of the blank region in the first pixel line when the density level of the second pixel is within a first predetermined range and the density level of the third pixel is outside a second predetermined range. The control unit may determine whether the target region is blank based on the information on the blank region in the print image output by the image processing unit.

For example, the first predetermined range and the second predetermined range may each be a range of plus or minus a predetermined density level of the density level of the first pixel.

For example, the first predetermined range may be a range of plus or minus a predetermined density level of the density level of a pixel adjacent to the second pixel, and the second predetermined range may be a range of plus or minus a predetermined density level of the density level of a pixel adjacent to the third pixel.

For example, the first predetermined range may be a range of plus or minus a predetermined density level of an average density level from the first pixel to a pixel adjacent to the second pixel, and the second predetermined range may be a range of plus or minus a predetermined density level of an average density level from the first pixel to a pixel adjacent to the third pixel.

For example, the identifying unit may further identify the position of the first pixel as the start position of the blank region in the first pixel line when a predetermined number of sequential pixels including and starting from the first pixel have the same density level, even when the density level of the first pixel is greater than or equal to the threshold level.

General or specific aspects of the present disclosure may be realized as a system, method, integrated circuit, computer program, computer readable medium such as a CD-ROM, or any given combination thereof.

### Advantageous Effects

A printer according to one aspect of the present invention is capable of efficiently reducing wasteful printing.

### Brief Description of Drawings

These and other objects, advantages and features of the invention will become apparent from the following description thereof taken in conjunction with the accompanying drawings that illustrate a specific embodiment of the present invention.
**[****FIG. 1****]**

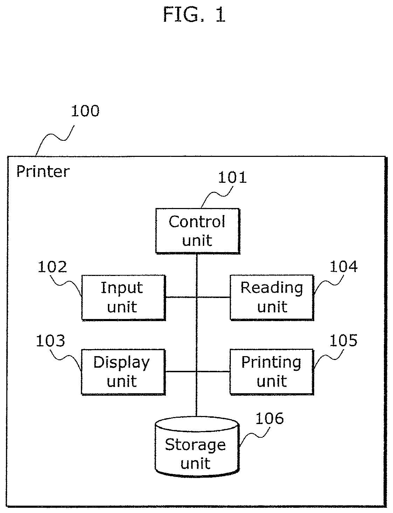

   FIG. 1 is a block diagram illustrating a functional configuration of a printer according to Embodiment 1.
**[****FIG. 2****]**

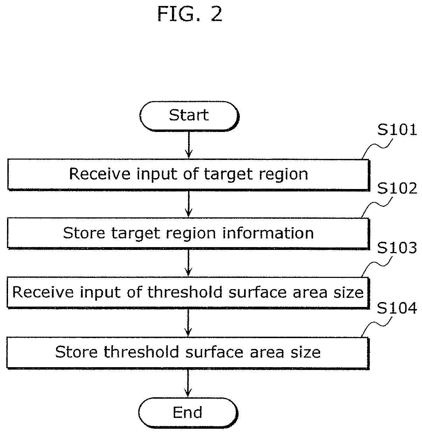

   FIG. 2 is a flow chart illustrating an input process performed by the printer according to Embodiment 1.
**[****FIG. 3****]**

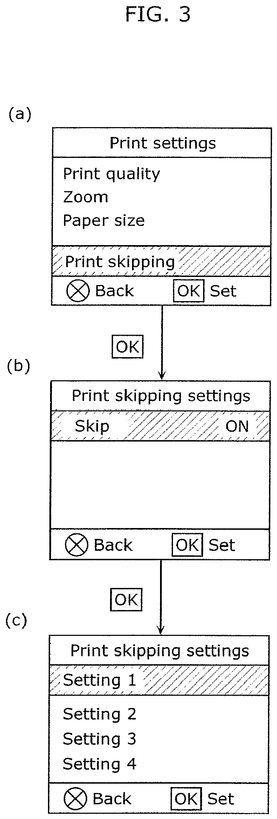

   FIG. 3 illustrates an example of a graphical user interface (GUI) used for the input process according to Embodiment 1.
**[****FIG. 4****]**

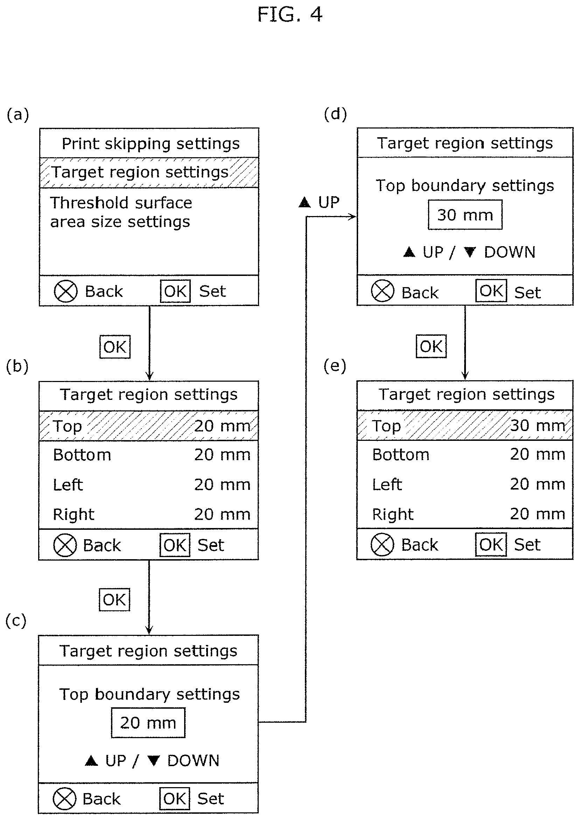

   FIG. 4 illustrates an example of a GUI used for the input process according to Embodiment 1.
**[****FIG. 5****]**

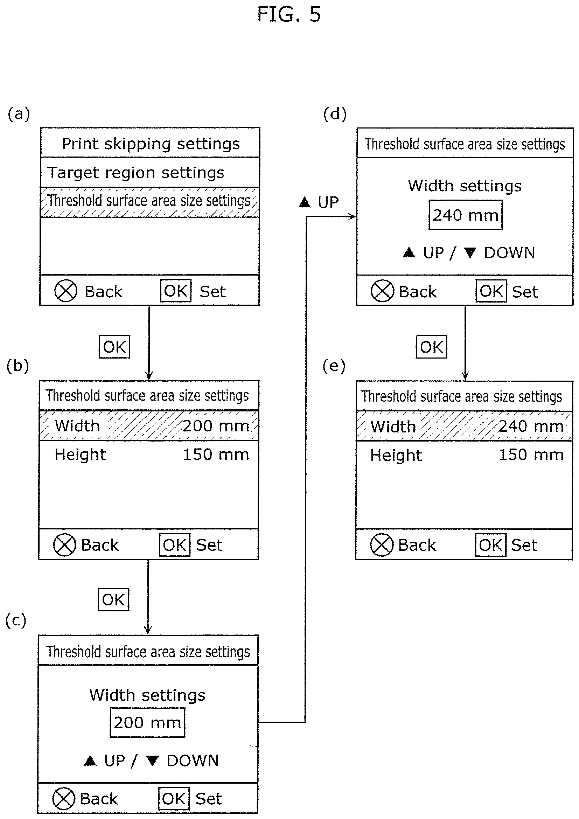

   FIG. 5 illustrates an example of a GUI used for the input process according to Embodiment 1.
**[****FIG. 6****]**

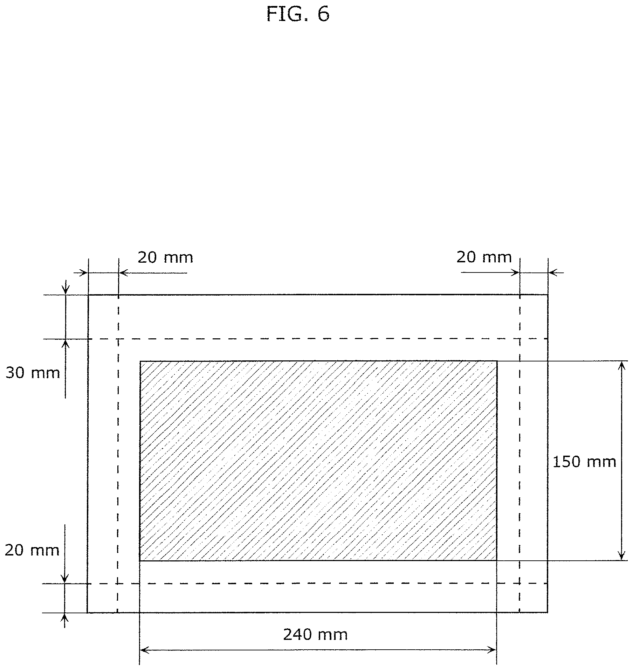

   FIG. 6 illustrates an example of a target region and a threshold surface area size specified in the input process according to Embodiment 1.
**[****FIG. 7****]**

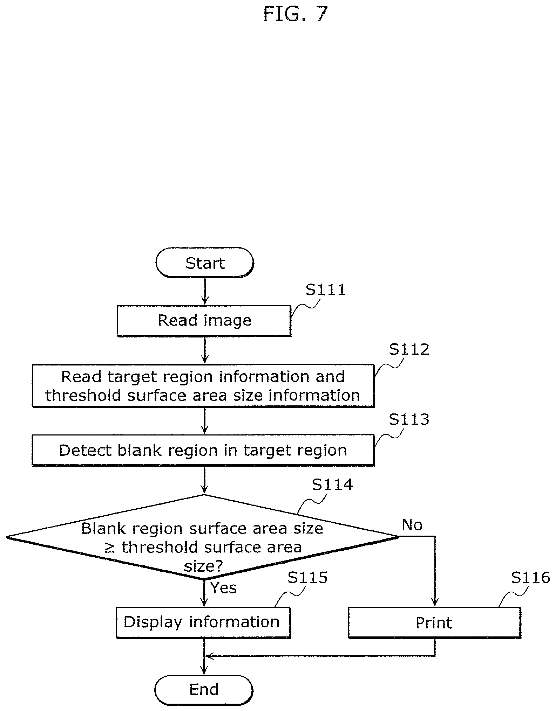

   FIG. 7 is a flow chart illustrating a printing process performed by the printer according to Embodiment 1.
**[****FIG. 8****]**

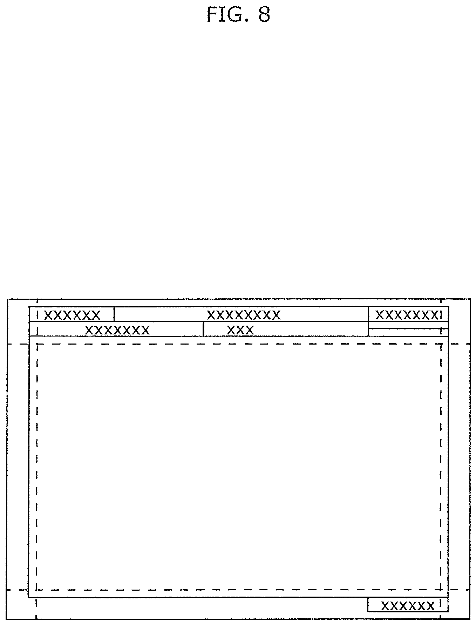

   FIG. 8 illustrates an example of a print image according to Embodiment 1.
**[****FIG. 9****]**

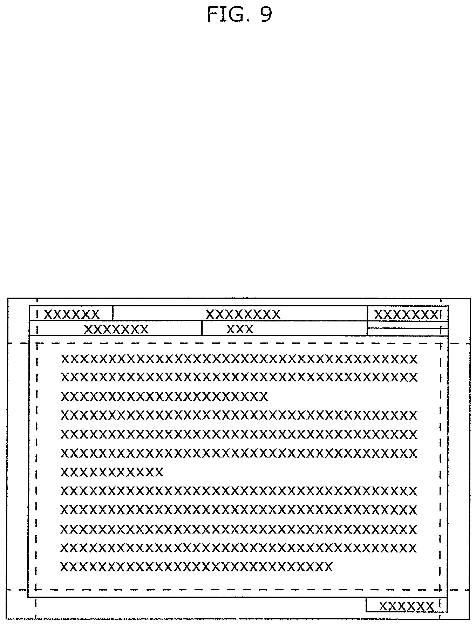

   FIG. 9 illustrates an example of the print image according to Embodiment 1.
**[****FIG. 10****]**

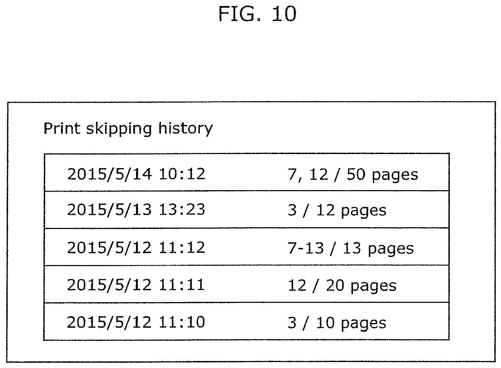

   FIG. 10 illustrates examples an example of how information indicating print images is presented according to Embodiment 1.
**[****FIG. 11****]**

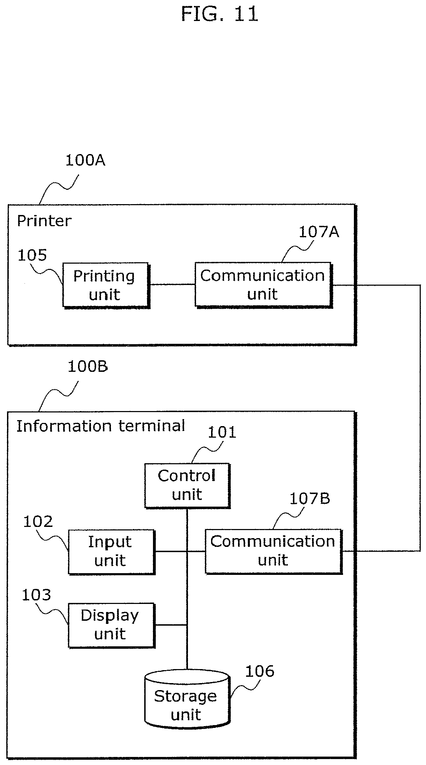

   FIG. 11 is a block diagram illustrating a functional configuration of a printer and an information terminal according to a variation of Embodiment 1.
**[****FIG. 12****]**

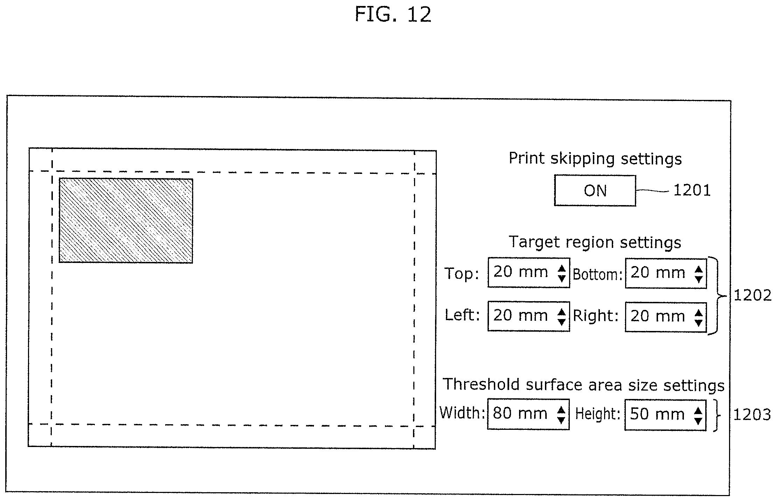

   FIG. 12 illustrates an example of a GUI used for the input process according to a variation of Embodiment 1.
**[****FIG. 13****]**

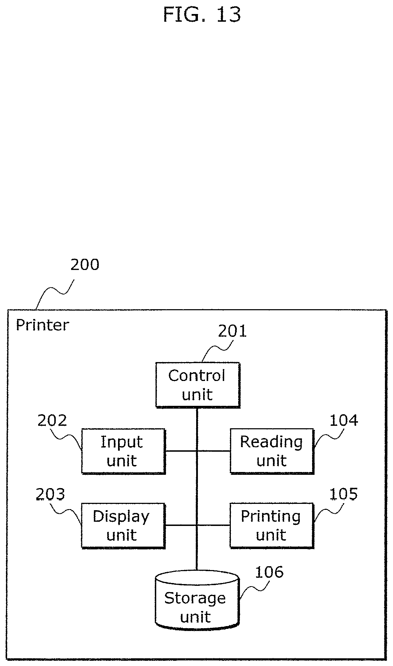

   FIG. 13 is a block diagram illustrating a functional configuration of a printer according to Embodiment 2.
**[****FIG. 14****]**

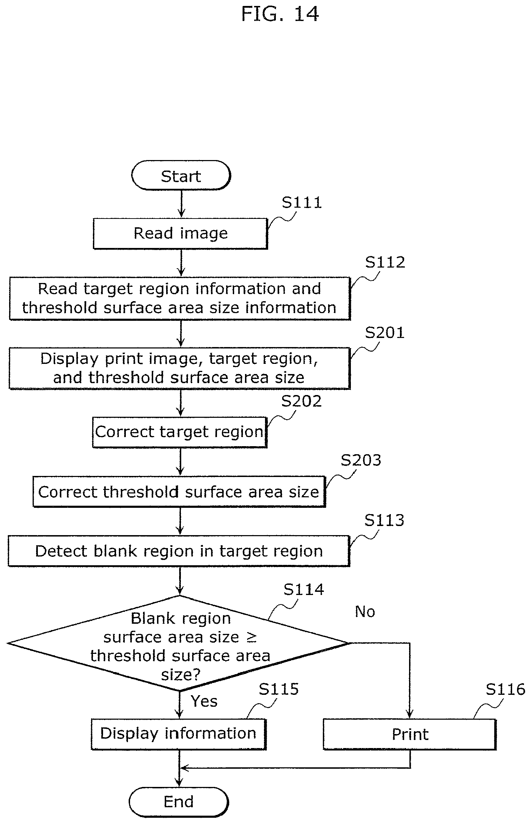

   FIG. 14 is a flow chart illustrating a printing process performed by the printer according to Embodiment 2.
**[****FIG. 15****]**

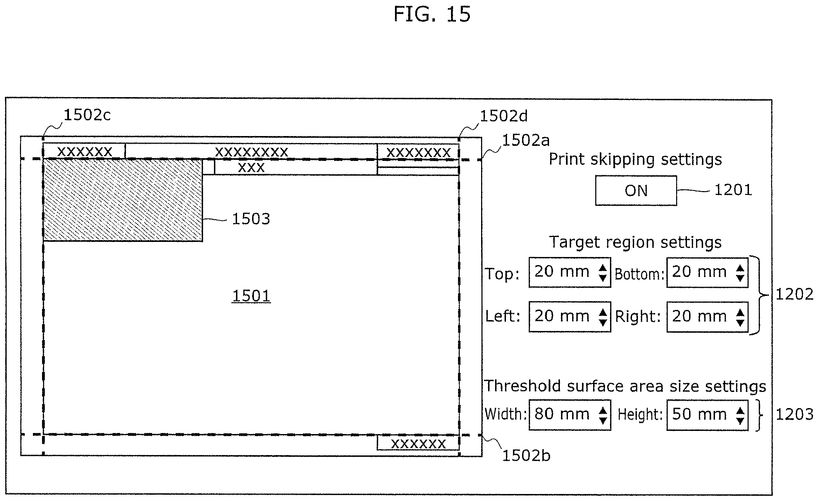

   FIG. 15 illustrates an example of a GUI used for the modification of the target region and the threshold surface area size according to Embodiment 2.
**[****FIG. 16****]**

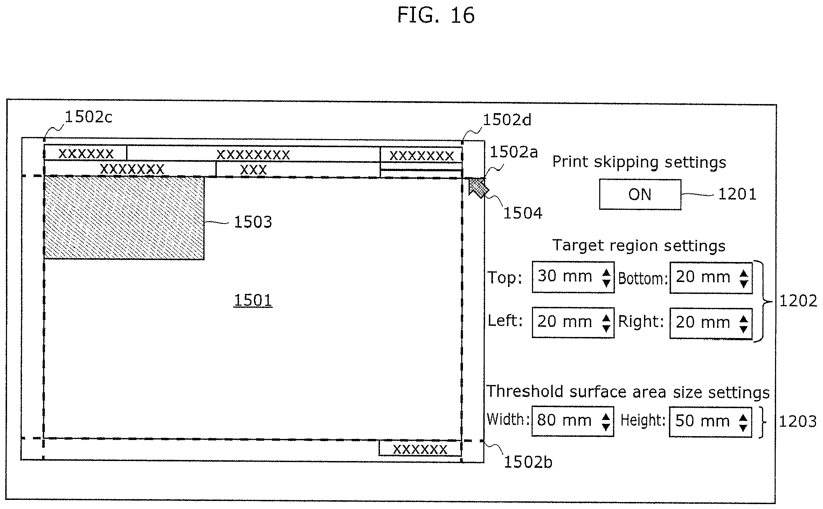

   FIG. 16 illustrates an example of a GUI used for the modification of the target region and the threshold surface area size according to Embodiment 2.
**[****FIG. 17****]**

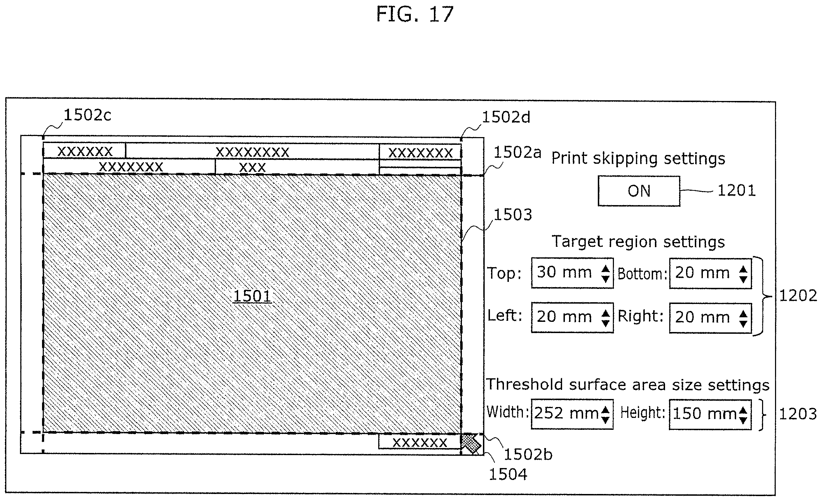

   FIG. 17 illustrates an example of a GUI used for the modification of the target region and the threshold surface area size according to Embodiment 2.
**[****FIG. 18****]**

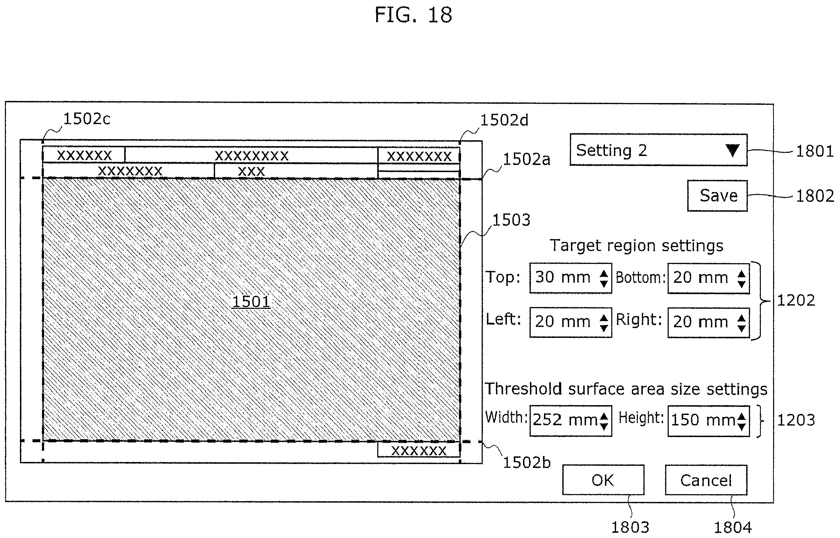

   FIG. 18 illustrates an example of a GUI used for the modification of the target region and the threshold surface area size according to a variation of Embodiment 2.
**[****FIG. 19****]**

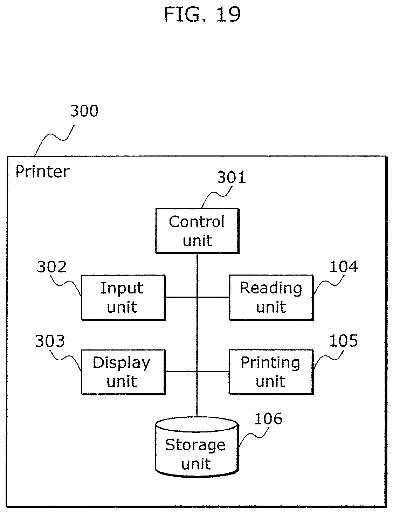

   FIG. 19 is a block diagram illustrating a functional configuration of a printer according to Embodiment 3.
**[****FIG. 20****]**

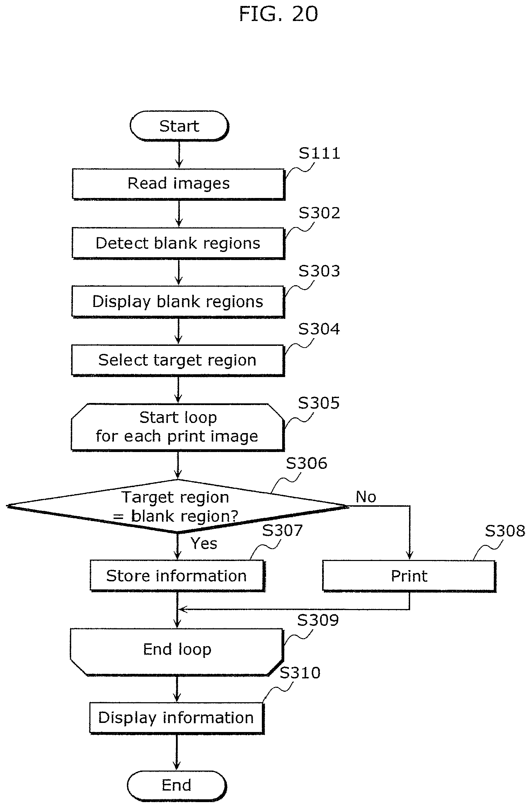

   FIG. 20 is a flow chart illustrating a printing process performed by the printer according to Embodiment 3.
**[****FIG. 21****]**

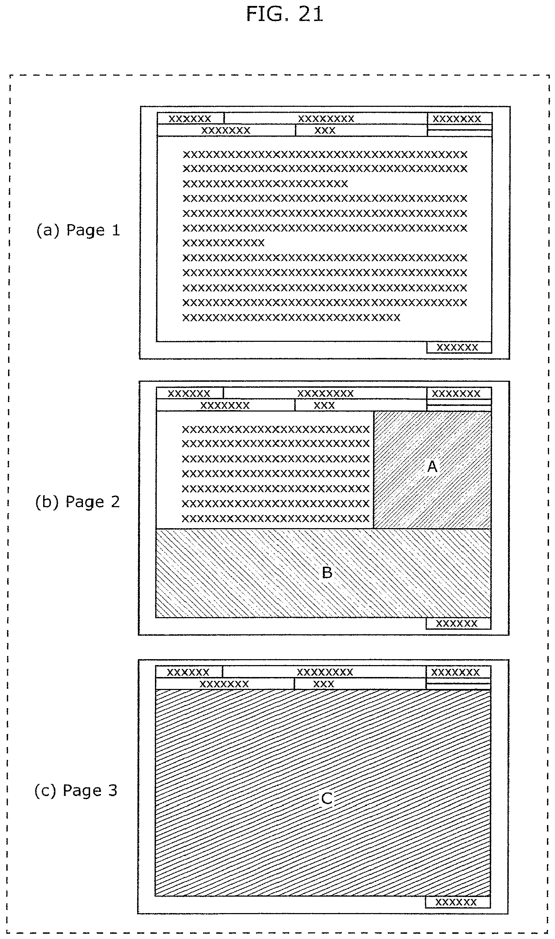

   FIG. 21 illustrates examples of detected blank regions according to Embodiment 3.
**[****FIG. 22****]**

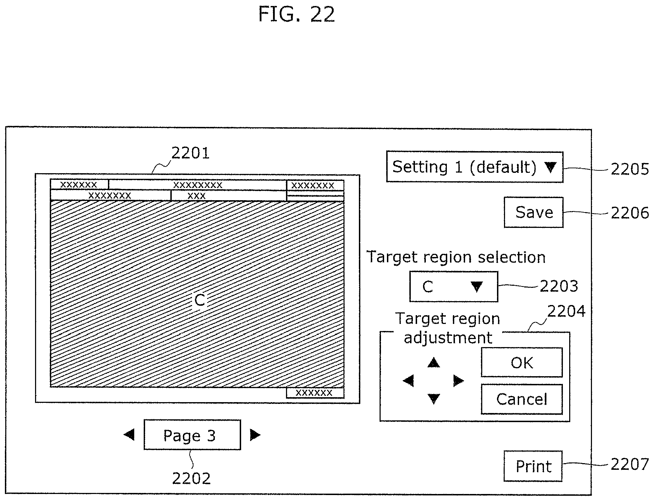

   FIG. 22 illustrates an example of a GUI used for selecting the target region according to Embodiment 3.
**[****FIG. 23****]**

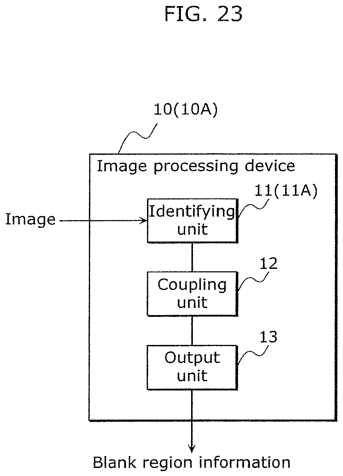

   FIG. 23 is a block diagram illustrating a functional configuration of an image processing device according to Embodiments 4 and 5.
**[****FIG. 24****]**

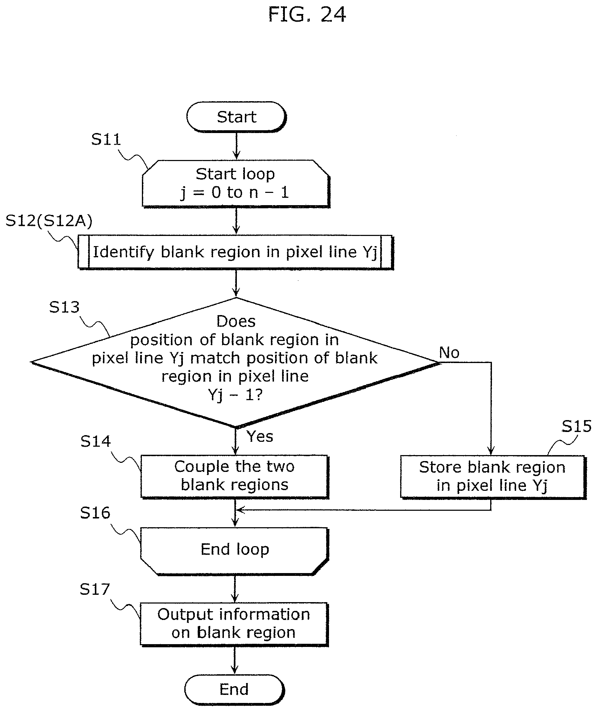

   FIG. 24 is a flow chart illustrating processes performed by the image processing device according to Embodiments 4 and 5.
**[****FIG. 25****]**

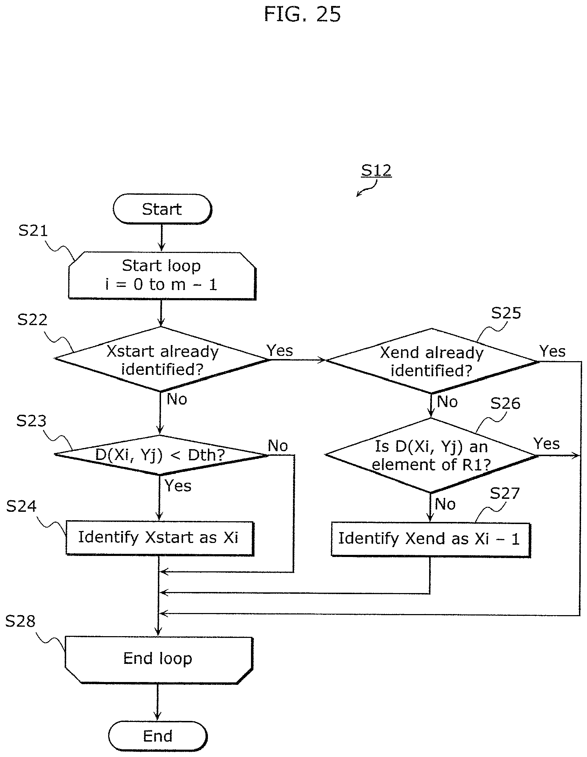

   FIG. 25 is a flow chart illustrating a blank region identification process performed by the image processing device according to Embodiment 4 in detail.
**[****FIG. 26A****]**

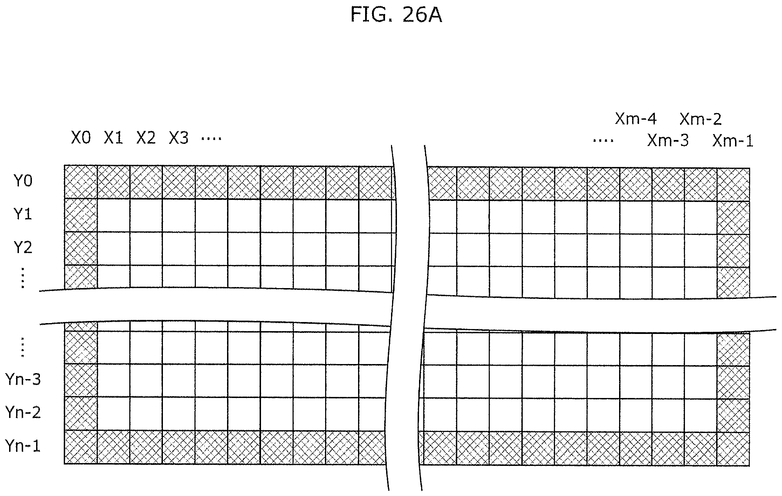

   FIG. 26A illustrates an example of an image for illustrating processes performed by the image processing device according to Embodiment 4.
**[****FIG. 26B****]**

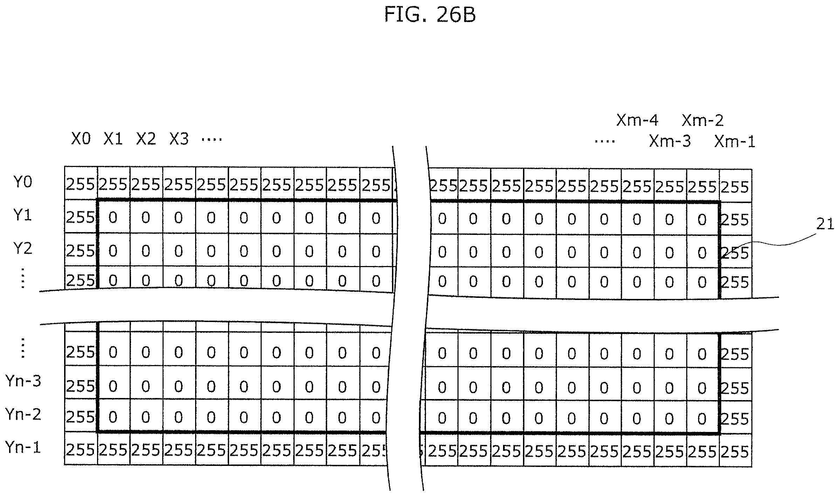

   FIG. 26B illustrates an example of density levels in an image for illustrating processes performed by the image processing device according to Embodiment 4.
**[****FIG. 27A****]**

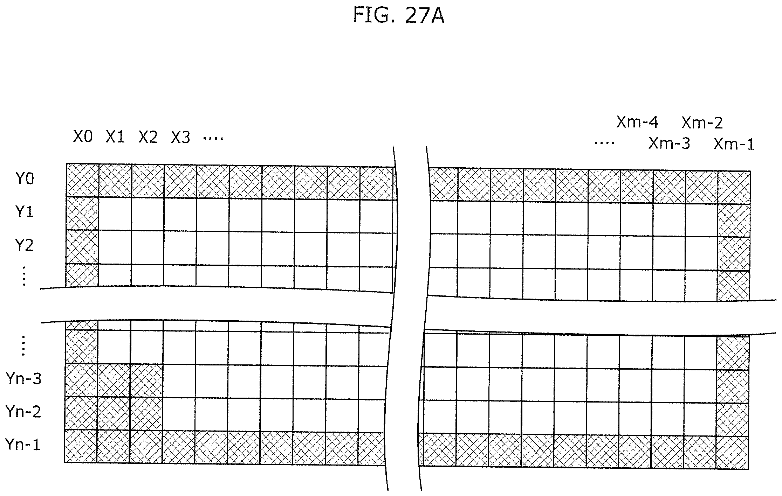

   FIG. 27A illustrates another example of an image for illustrating processes performed by the image processing device according to Embodiment 4.
**[****FIG. 27B****]**

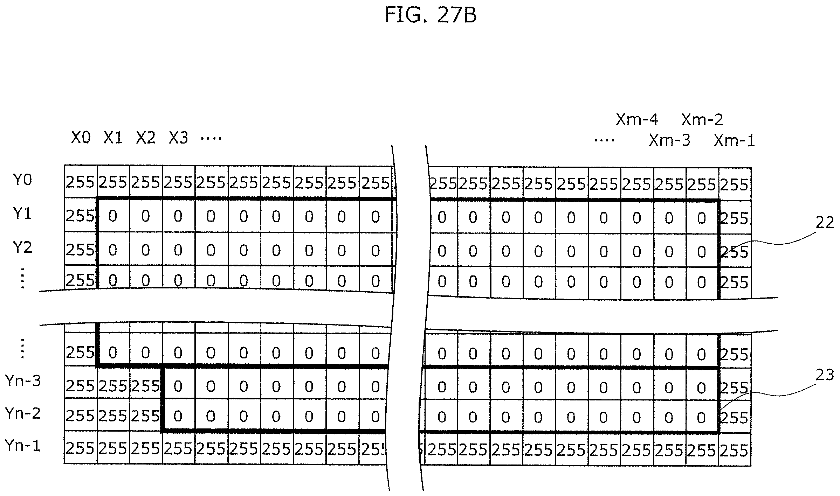

   FIG. 27B illustrates another example of density levels in an image for illustrating processes performed by the image processing device according to Embodiment 4.
**[****FIG. 28****]**

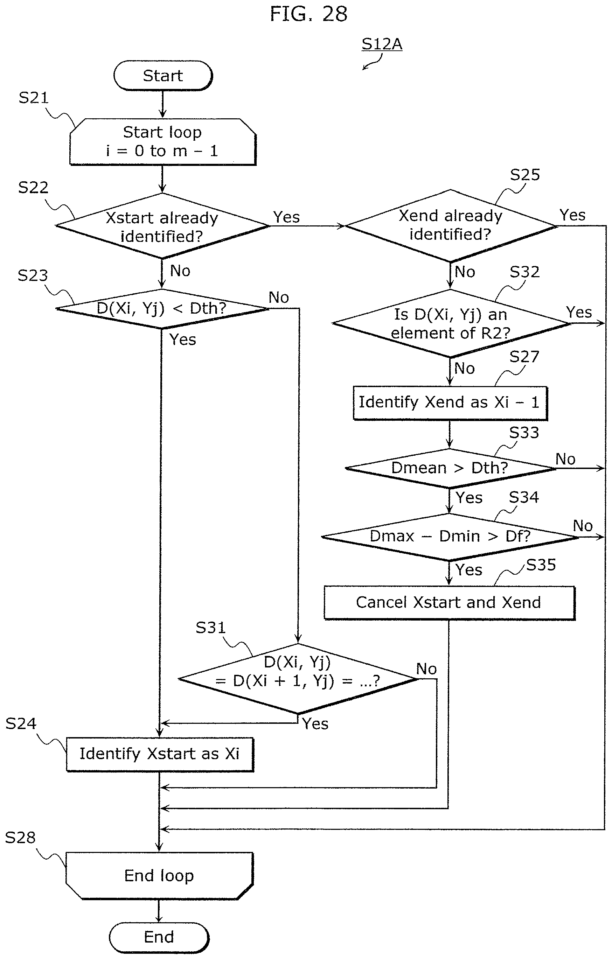

   FIG. 28 is a flow chart illustrating a blank region identification process performed by the image processing device according to Embodiment 5 in detail.
**[****FIG. 29A****]**

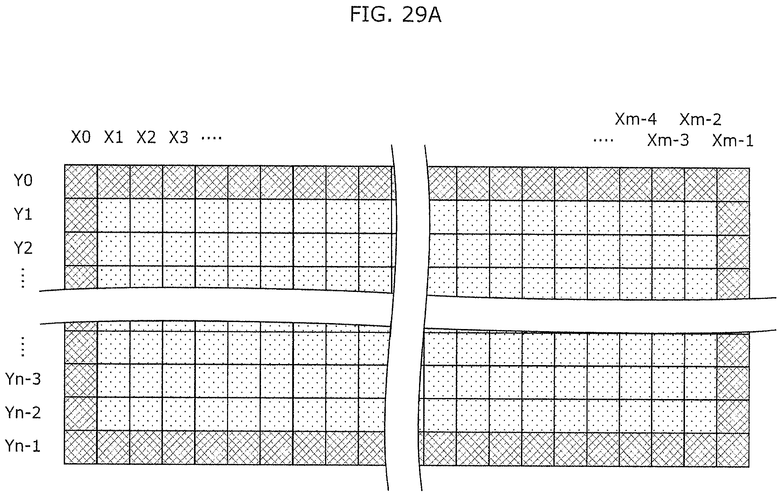

   FIG. 29A illustrates an example of an image for illustrating processes performed by the image processing device according to Embodiment 5.
**[****FIG. 29B****]**

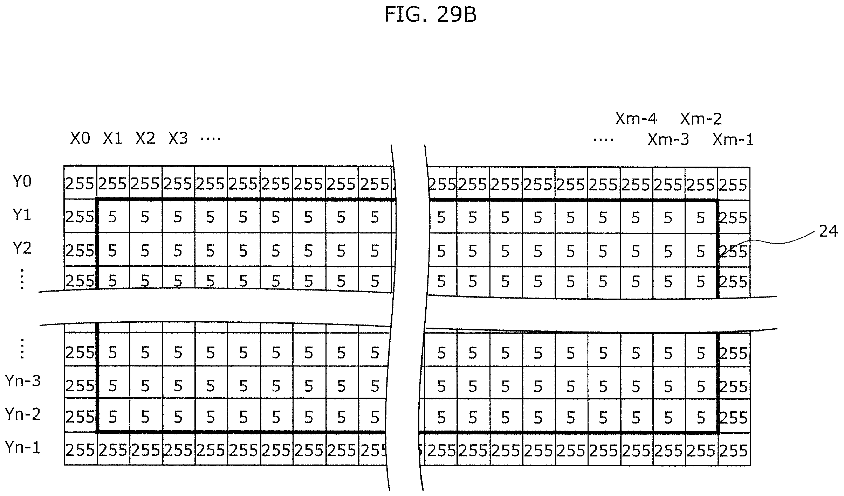

   FIG. 29B illustrates an example of density levels in an image for illustrating processes performed by the image processing device according to Embodiment 5.
**[****FIG. 30****]**

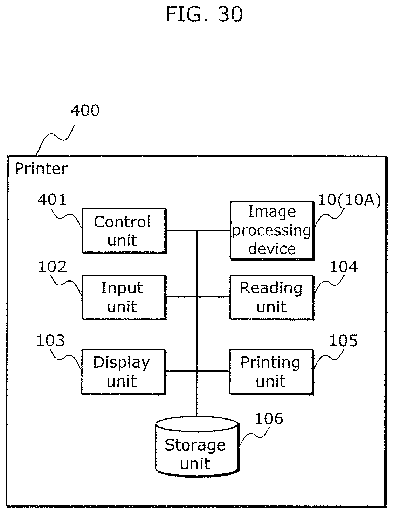

   FIG. 30 is a block diagram illustrating a functional configuration of a printer according to Embodiment 6.

### Description of Embodiments

### (Underlying Knowledge Forming Basis of the Present Invention)

There are instances when a plurality of print images include shared information found in all the print images. For example, there are instances when the header and footer regions of the print images include shared information (for example, creator, title, copyright notice, page number, etc.). With conventional techniques, when a printer is instructed to print a print image including nothing but such shared information, the print image is determined to be not a blank page, and is printed.

However, if the print images do not include any information other than the shared information found in all the print images, printing such print images may be wasteful.

Therefore, a printer and a printing method capable of efficiently reducing wasteful printing will be described based on embodiments.

Each of the embodiments described below presents a general or specific example. The numerical values, shapes, materials, elements, the arrangement and connection of the elements, steps, the processing order of the steps, etc., presented in the following embodiments are mere examples, and therefore do not limit the scope of the Claims. Thus, among the elements in the following embodiments, elements not recited in any one of the independent claims are described as optional elements.

### Embodiment 1

First, Embodiment 1 will be described in detail with reference to the drawings.

### (Printer Configuration)

FIG. 1 is a block diagram illustrating the functional configuration of a printer 100 according to Embodiment 1. As illustrated in FIG. 1, the printer 100 includes a control unit 101, an input unit 102, a display unit 103, a reading unit 104, a printing unit 105, and a storage unit 106. Hereinafter, each element in the printer 100 will be described in detail.

The control unit 101 is realized as, for example, a generic processor or a dedicated electronic circuit. The control unit 101 is also referred to as a controller. The control unit 101 executes or cancels the printing of a print image in accordance with the print image.

In this embodiment, the control unit 101 determines whether a target region of a print image is blank. The control unit 101 then controls the printing unit 105 based on the result of the determination.

The print image is an image representing, for example, a document or illustration to be printed. The target region is a portion of the print image. In other words, the target region is smaller in size than the entire region of the print image.

Moreover, "blank" means devoid of useful information. Typically, "blank" refers to a white image. Note that "blank" may refer to an image of a predetermined color.

Next, a specific example of the determination of whether the target region is blank will be given.

The control unit 101 detects a blank region in the target region of the print image. For example, the control unit 101 detects, as a blank region, a cluster of pixels whose density values indicate the color white. Note that a blank region may be detected by any given method and is not particularly limited to a specific method.

The control unit 101 then compares the surface area size of the blank region detected in the target region of the print image with a threshold surface area size to determine whether the target region is blank. In other words, when the surface area size of the blank region in the target region is greater than or equal to the threshold surface area size, the control unit 101 determines that the target region is blank. In contrast, when the surface area size of the blank region in the target region is less than the threshold surface area size, the control unit 101 determines that the target region is not blank.

The input unit 102 is realized as, for example, an input device. The input device is, for example, a push button or touch panel provided on the housing of the printer 100.

In this embodiment, the input unit 102 receives an input of the target region of the print image and an input of the threshold surface area size from the user. In other words, the input unit 102 receives an input of information for specifying the target region and the threshold surface area size from the user.

The display unit 103 is realized as, for example, a display. Note that the display unit 103 may be realized as a touch display along with the input unit 102.

In this embodiment, the display unit 103 displays information indicating the print image when the control unit 101 determines that the target region of the print image is blank. The information indicating the print image includes at least one of the date and time at which the printing of the print image was canceled and the page number of the print image.

The reading unit 104 is realized as, for example, an image sensor (for example, a contact image sensor (CIS) or charged coupled devices (CCD) image sensor). The reading unit 104 reads a print image of a sheet-like medium illustrating, for example, a document or illustration.

The printing unit 105 is realized as, for example, a printing device for laser printing or ink jet printing. The printing unit 105 reads a print image of a sheet-like medium illustrating, for example, a document or image.

In this embodiment, when the printing unit 105 determines that the target region in a print image is blank, the printing unit 105 executes printing of the print image based on an instruction from the control unit 101. In contrast, when the printing unit 105 determines that the target region in a print image is not blank, the printing unit 105 cancels printing of the print image based on an instruction from the control unit 101.

Storage unit 106 is realized as, for example, a semiconductor memory or hard disk drive. The storage unit 106 stores the target region information indicating the target region received from the input unit 102, and threshold surface area size information indicating the threshold surface area size received from the input unit 102. The target region information includes, for example, values indicating locations of four boundary lines surrounding the rectangular target region. The threshold surface area size information includes, for example, values indicating the width and height of the rectangular shape defined by the threshold surface area size.

### (Processes Performed by Printer)

Next, processes performed by the printer 100 configured as described above will be described in detail. Processes performed by the printer 100 include an input process and a printing process. Hereinafter the input process will be described followed by the printing process.

### (Input Process)

First, the flow of the input process will be described with reference to FIG. 2. FIG. 2 is a flow chart illustrating the input process performed by the printer 100 according to Embodiment 1.

The input unit 102 receives an input of a target region from the user (S101). The control unit 101 then stores target region information indicating the target region in the storage unit 106 (S102). In other words, the target region is set based on an input from the user. The input of the target region will be described in further detail later with reference to FIG. 4.

The input unit 102 further receives an input of a threshold surface area size from the user (S103). The control unit 101 then stores threshold surface area size information indicating the threshold surface area size in the storage unit 106 (S104). In other words, the threshold surface area size is set based on an input from the user. The input of the threshold surface area size will be described in further detail later with reference to FIG. 5.

Next, the input of the target region and the input of the threshold surface area size will be described in further detail later with reference to FIG. 3 through FIG. 5. FIG. 3 through FIG. 5 illustrate examples of graphical user interfaces (GUIs) used for the input process according to Embodiment 1. The GUIs illustrated in FIG. 3 through FIG. 5 are displayed by the display unit 103. Note that in FIG. 3 through FIG. 5, the regions shaded by hatching indicate regions which are selected on the screen.

In (a) in FIG. 3, a GUI for selecting a parameter to be set from among a plurality of parameters is illustrated. A parameter is a value assigned to the printer 100 to cause the printer 100 to perform a desired operation.

For example, in (a) in FIG. 3, in order to set the parameter for print skipping, the user presses the OK button while the "print skipping" selection is selected. Doing so transitions the screen from (a) in FIG. 3 to (b) in FIG. 3.

In (b) in FIG. 3, a GUI for setting a parameter indicating whether print skipping is activated or deactivated is illustrated. The parameter for "print skipping" being activated (ON) means the canceling of the printing of a print image in accordance with the print image is permitted. Conversely, the parameter for "print skipping" being deactivated (OFF) means the canceling of the printing of a print image in accordance with the print image is prohibited.

For example, in (b) in FIG. 3, the user presses the OK button to activate print skipping. Doing so sets a value indicating that a parameter indicating whether print skipping is activated or deactivated is activated, and transitions the screen from (b) in FIG. 3 to (c) in FIG. 3.

In (c) in FIG. 3, a GUI for selecting one of a plurality of sets of settings stored in storage unit 106 for the target region information and the threshold surface area size information. Here, four sets of settings for the target region information and the threshold surface area size information (more specifically, setting 1 through setting 4) are displayed as selections.

In (c) in FIG. 3, for example, the user has set the settings to setting 1 by pressing the OK button while "setting 1" is selected. Doing so transitions the screen from (c) in FIG. 3 to (a) in FIG. 4 and (a) in FIG. 5.

In (a) in FIG. 4 and (a) in FIG. 5, a GUI for selecting parameters to be set from among parameters for the target region and the threshold surface area size is illustrated. Note that (a) in FIG. 4 and (a) in FIG. 5 illustrate the same screen, but the selected region is different.

Here, first, the flow for setting parameters for the target region will be described with reference to FIG. 4.

For example, in (a) in FIG. 4, in order to set parameters for the target region, the user presses the OK button while the "target region settings" selection is selected. Doing so transitions the screen from (a) in FIG. 4 to (b) in FIG. 4.

In (b) in FIG. 4, a GUI for displaying and selecting parameters indicating the target region is illustrated. Here, values for four parameters included in the target region information corresponding to setting 1 selected in (c) in FIG. 3 are displayed.

These four parameters indicate distances between the four boundary lines surrounding the rectangular target region and the corresponding edges of the print image. For example, in (b) in FIG. 4, the distance between the top boundary line of the target region and the top edge of the print image is displayed as 20 mm.

For example, in (b) in FIG. 4, in order to update the parameter indicating the position of the top boundary line of the target region, the user presses the OK button while the "top 20 mm" selection is selected. Doing so transitions the screen from (b) in FIG. 4 to (c) in FIG. 4.

In (c) and (d) in FIG. 4, GUIs for setting a value for the parameter indicating the position of the top boundary line of the target region are illustrated. Here, the value for the parameter indicating the position of the top boundary line of the target region is changed via UP and DOWN buttons.

In (c) in FIG. 4, for example, the user presses the UP button multiple times to change the value for the parameter indicating the position of the top boundary line of the target region from 20 mm to 30 mm. Doing causes the screen to change from (c) in FIG. 4 to (d) in FIG. 4.

In (d) in FIG. 4, for example, the parameter indicating the position of the top boundary line is set by pressing the OK button. This updates the value for the parameter indicating the position of the top boundary line to 30 mm. In other words, the target region information corresponding to setting 1 is updated. The screen transitions from (d) in FIG. 4 to (e) in FIG. 4.

In (e) in FIG. 4, similar to (b) in FIG. 4, a GUI for displaying and selecting parameters indicating the boundary lines of the target region is illustrated. In (e) of FIG. 4, it can be seen that the value for the parameter indicating the position of the top boundary line has been updated from 20 mm to 30 mm. Note that although detailed description is omitted, values for the parameters indicating the positions of the bottom, left, and right boundary lines of the target region can be set in the same manner as the parameter indicating the position of the top boundary line.

Next, the flow for setting parameters for the threshold surface area size will be described with reference to FIG. 5.

For example, in (a) in FIG. 5, in order to set parameters for the threshold surface area size, the user presses the OK button while the "threshold surface area size settings" selection is selected. Doing so transitions the screen from (a) in FIG. 5 to (b) in FIG. 5.

In (b) in FIG. 5, a GUI for displaying and selecting parameters indicating the threshold surface area size is illustrated. Here, values for two parameters included in the threshold surface area size information corresponding to setting 1 selected in (c) in FIG. 3 are displayed.

These two parameters indicate the width and height of the rectangle shape defined by the threshold surface area size. For example, in (b) in FIG. 5, the width and height of the rectangle shape defined by the threshold surface area size are displayed as being 200 mm and 150 mm, respectively.

For example, in (b) in FIG. 5, in order to update the parameter indicating width, the user presses the OK button while the "width 200 mm" selection is selected. Doing so transitions the screen from (b) in FIG. 5 to (c) in FIG. 5.

In (c) and (d) in FIG. 5, GUIs for setting a value for the parameter indicating the width of the rectangle shape defined by the threshold surface area size are illustrated. Here, value for the parameter indicating width is changed via UP and DOWN buttons.

For example, in (c) in FIG. 5, the user presses the UP button multiple times to update the value for the parameter indicating width from 200 mm to 240 mm. Doing causes the screen to change from (c) in FIG. 5 to (d) in FIG. 5.

For example, in (d) in FIG. 5, the user presses the OK button to set the value for the parameter indicating width. This sets the parameter indicating width to 240 mm. In other words, the value for the parameter indicating width in the threshold surface area size information corresponding to setting 1 is updated. The screen transitions from (d) in FIG. 5 to (e) in FIG. 5.

In (e) in FIG. 5, similar to (b) in FIG. 5, a GUI for displaying and selecting parameters indicating the threshold surface area size is illustrated. In (e) of FIG. 5, it can be seen that the value for the parameter indicating width has been updated from 200 mm to 240 mm. Note that although detailed description is omitted, the value for the parameter indicating height can be updated in the same manner as the parameter indicating width.

FIG. 6 illustrates an example of the target region and the threshold surface area size specified in the input process according to Embodiment 1. Here, FIG. 6 illustrates the parameters for the target region and the threshold surface area size set in FIG. 3 through FIG. 5.

In FIG. 6, the four dashed lines represent the target region. More specifically, the four dashed lines are the boundary lines of the target region specified by the parameter values illustrated in (e) in FIG. 4. The rectangular region surrounded by these four dashed lines is the target region.

Moreover, the region shaded by hatching represents the threshold surface area size. More specifically, the region shaded by hatching is a rectangular region defined by the threshold surface area size specified by the parameter values illustrated in (e) in FIG. 5. Here, the surface area size of the region shaded by hatching is the threshold surface area size.

### (Printing Process)

Next, the printing process will be described with reference to FIG. 7 through FIG. 10. Next, a case in which the printer 100 receives an instruction to create a copy of a sheet-like medium (for example, a document, illustration, or a picture) illustrating, for example, print or graphics.

FIG. 7 is a flow chart illustrating the printing process performed by the printer 100 according to Embodiment 1. FIG. 8 and FIG. 9 illustrate examples of the print image according to Embodiment 1. FIG. 10 illustrates an example of how information indicating print images is presented according to Embodiment 1.

As illustrated in FIG. 7, first, the reading unit 104 reads the image (S111). In other words, the reading unit 104 generates the print image by optically reading the surface of the sheet-like medium illustrating, for example, print or graphics.

The control unit 101 reads the target region information and the threshold surface area size information from the storage unit 106 (S112). For example, the control unit 101 reads the values for the parameters indicating the top, bottom, left, and right boundary lines (30 mm, 20 mm, 20 mm, 20mm), and the values for the parameters indicating the width and height of the rectangle defined by the threshold surface area size (240 mm, 150 mm) from the storage unit 106.

The control unit 101 detects a blank region in the target region of the print image obtained in step S101 (S113). For example, the control unit 101 detects pixels having a density value less than a predetermined value among pixels included in the target region.

The control unit 101 determines whether the surface area size of the blank region in the target region is greater than or equal to the threshold surface area size (S114). In other words, the control unit 101 determines whether the target region is blank. Stated differently, the control unit 101 determines whether the target region includes any useful information.

For example, in the print image illustrated in FIG. 8, the control unit 101 determines that the surface area size of the blank region in the target region surrounded the four dashed lines is greater than or equal to the threshold surface area size. Moreover, for example, in the print image illustrated in FIG. 9, the control unit 101 determines that the surface area size of the blank region in the target region surrounded the dashed lines is less than the threshold surface area size.

Here, when the surface area size of the blank region is greater than or equal to the threshold surface area size (yes in S114), the display unit 103 displays information indicating the print image (S115). In other words, when the control unit 101 determines that the target region is blank, the printing of the print image (i.e., the generation of a copy) is canceled, and the display unit 103 displays information indicating the print image to the user. For example, as illustrated in FIG. 10, the display unit 103 displays the date and time at which the printing was canceled, the page number of the canceled print image, and the total number of pages of the print images including the canceled print image.

However, when the surface area size of the blank region is less than the threshold surface area size (no in S114), the printing unit 105 executes the printing of the print image (S116).

In this way, by performing the printing process, printing of the print image illustrated in FIG. 8 is canceled, and printing of the print image illustrated in FIG. 9 is executed.

### (Advantageous Effects)

As described above, according to this embodiment, it is possible to cancel printing of a print image in accordance with a determination result of whether a region (target region), which is a portion of the print image, is blank. Therefore, when the print image includes information only outside of the target region, the printing of the print image can be canceled. For example, when the print image is design documentation created using a standard format, there are instances where all design documentation includes shared information in a predetermined region. In such a case, by using a region other than the predetermined region including such shared information as the target region, it is possible to cancel the printing of a print image that includes only the shared information and thus efficiently reduce wasteful printing.

Further, according to this embodiment, it is possible to determine whether the target region is blank by comparing the surface area size of the blank region detected in the target region with a threshold surface area size. Therefore, when, for example, the target region includes pixels having erroneous density values (i.e., error pixels), it is possible to prevent the execution of printing caused only by such error pixels. In other words, resistance to error can be improved and wasteful printing can be further efficiently reduced.

Further, according to this embodiment, information indicating the print image can be displayed when the target region of the print image is determined to be blank. In other words, when printing of the print image is canceled, a notification of the canceling of the print image can be presented to the user. Therefore, when the printing of a print image that should be printed is canceled, the user can reprint the print image or reset the target region in accordance with the displayed information.

Further, according to this embodiment, the information indicating the print image can include at least one of the date and time at which the printing of the print image was canceled and the page number of the print image. Therefore, the user can easily confirm which print images were canceled.

### Variation of Embodiment 1

Next, a variation of Embodiment 1 will be described. In Embodiment 1, the input process and the printing process were performed by the printer, but in this variation, an example in which part of the input process and the printing process is performed by an information terminal will be described. Hereinafter, the printer and information terminal according to this variation will be described with reference to the drawings. Note that in this variation, in order to avoid redundant description, configurations that are essentially the same as in Embodiment 1 will be omitted from the description and drawings as necessary.

FIG. 11 is a block diagram illustrating the functional configuration of a printer 100A and an information terminal 100B according to a variation of Embodiment 1. The printer 100A includes the printing unit 105 and a communication unit 107A. The information terminal 100B is, for example, a smartphone, tablet computer, or personal computer, and includes the control unit 101, the input unit 102, the display unit 103, and a communication unit 107B.

The communication unit 107A in the printer 100A is realized as, for example, a communication adapter for wired or wireless communication. The communication unit 107A receives print images from the information terminal 100B.

The communication unit 107B in the information terminal 100B is realized as, for example, a communication adapter for wired or wireless communication. The communication unit 107B transmits, to the printer 100A, print images whose target regions are determined to not be blank by the control unit 101 in information terminal 100B. Conversely, the communication unit 107B does not transmit, to the printer 100A, print images whose target regions are determined to be blank by the control unit 101 in information terminal 100B. With this, the printing of print images whose target regions are determined to be blank is canceled.

FIG. 12 illustrates an example of a GUI used for the input process according to a variation of Embodiment 1. This GUI is a window displayed on the display unit 103 of the information terminal 100B.

A visual representation of the target region and the threshold surface area size in the printing area of the print image are shown on the left side of the window. The target region is represented by four boundary line (dashed lines), and the threshold surface area size is represented by a rectangular region shaded by hatching.

For example, the user can set the positions of the boundary lines by touching and moving the boundary lines. In other words, the user can set the values for the parameters indicating the positions of the boundary lines via touch. Note that as an alternative to setting the values for the parameters indicating the positions of the boundary lines via touch, the values may be set via a mouse. Note that just like the boundary line, the threshold surface area size can also be set via touch or a mouse.

Various components for displaying and setting values for various parameters are arranged on the right side of the window.

The button 1201 is a component for displaying and setting a value for a parameter indicating whether print skipping is activated or deactivated. For example, the user switches between activation and deactivation of print skipping by touching or clicking the button 1201.

The text boxes 1202 are components for displaying and setting the positions of the four boundary lines defining the target region. The text boxes 1203 are components for displaying and setting the width and height of the rectangular region defined by the threshold surface area size. For example, the user can set the values in the text boxes by touching or clicking the UP and DOWN buttons on the right sides of the text boxes.

Note that the boundary lines and the rectangular region shaded by hatching that are displayed on the left side of the window and the various components displayed on the right side of the window are linked. For example, when a boundary line is moved via touch, values in the text boxes 1202 also update.

As described above, according to this variation, even when a print image is transmitted from the information terminal 100B to the printer 100A, it is possible to cancel the printing of a print image and thus efficiently reduce wasteful printing, just like in Embodiment 1.

### Embodiment 2

Next, Embodiment 2 will be described. This embodiment differs from Embodiment 1 in that the target region and the threshold surface area size are displayed along with the print image and the displayed target region and threshold surface area size are modified. Hereinafter, the printer according to this variation will be described with reference to the drawings. Note that in this embodiment, in order to avoid redundant description, configurations that are essentially the same as in Embodiment 1 will be omitted from the description and drawings as necessary.

### (Printer Configuration)

FIG. 13 is a block diagram illustrating the functional configuration of a printer 200 according to Embodiment 2. As illustrated in FIG. 13, the printer 200 includes a control unit 201, an input unit 202, a display unit 203, the reading unit 104, the printing unit 105, and the storage unit 106.

Similar to the control unit 101 described in Embodiment 1, the control unit 201 determines whether a target region of a print image is blank. The control unit 201 further modifies, based on an input received by the input unit 202 from the user, the target region and the threshold surface area size displayed by the display unit 203.

Similar to the input unit 102 described in Embodiment 1, the input unit 202 receives an input of the target region of the print image and an input of the threshold surface area size from the user. In this embodiment, the input unit 202 further receives an input of a modification for the target region displayed by the display unit 203 and an input of a modification for the threshold surface area size displayed by the display unit 203 from the user.

The display unit 203 displays the target region and the threshold surface area size along with the print image. For example, the display unit 203 displays marks or graphics representing the target region and threshold surface area size on the print image. Moreover, similar to the display unit 103 described in Embodiment 1, the display unit 203 displays information indicating the print image when the control unit 201 determines that the target region of the print image is blank.

### (Processes Performed by Printer)

Next, processes performed by the printer 200 configured as described above will be described in detail. The input process is the same as described in Embodiment 1, and as such, hereinafter the printing process will be described with reference to FIG. 14 through FIG. 17.

FIG. 14 is a flow chart illustrating the printing process performed by the printer 200 according to Embodiment 2. FIG. 15 through FIG. 17 illustrate examples of GUIs used for the modification of the target region and the threshold surface area size according to Embodiment 2.

As illustrated in FIG. 14, similar to Embodiment 1, reading of the image (S111) and reading of the target region information and the threshold surface area size information (S112) are performed.

The display unit 203 displays, along with the print image generated in step S111, the target region and the threshold surface area size indicated in the target region information and the threshold surface area size information read in step S112 (S201). For example, as illustrated in FIG. 15, the display unit 203 displays the boundary lines 1502a through 1502d defining the target region and the rectangle 1503 defined by the threshold surface area size on the print image 1501.

The input unit 202 receives an input of a modification for the displayed target region from the user, and the control unit 201 modifies the target region based on the input (S202). For example, as illustrated in FIG. 16, the input unit 202 receives an input, from the user, of moving the top boundary line 1502a downward using the cursor 1504. As a result, a value in the text boxes 1202 indicating positions of the boundary lines defining the target region is updated. Note that values may be directly input into text boxes 1202.

The input unit 202 receives an input of a modification for the displayed threshold surface area size from the user, and the control unit 201 modifies the threshold surface area size based on the input (S203). For example, as illustrated in FIG. 17, the input unit 202 receives an input, from the user, of dragging the bottom right corner of the rectangle 1503 defined by the threshold surface area size down and to the right using the cursor 1504. As a result, the values in the text boxes 1203 indicating the width and height of the rectangle defined by the threshold surface area size are updated. Note that values may be directly input into text boxes 1203.

Then, just like in Embodiment 1, steps S113 through S116 are performed.

### (Advantageous Effects)

As described above, according to this embodiment, the target region can be displayed along with the print image. Therefore, the user can visually check the print image and the target region, making it possible to modify the target region in a manner suitable for the print image and thus efficiently reduce wasteful printing even further.

Moreover, according to this embodiment, the threshold surface area size can be displayed along with the print image. Therefore, the user can visually check the print image and the threshold surface area size, making it possible to modify the threshold surface area size in a manner suitable for the print image and thus efficiently reduce wasteful printing even further.

### Variation of Embodiment 2

Next, a variation of Embodiment 2 will be described. In this variation, the target region and the threshold surface area size are selected from among a plurality of candidate target regions and a plurality of candidate threshold surface area sizes, and the selected target region and threshold surface area size are modified. Note that in this variation, in order to avoid redundant description, configurations that are essentially the same as in Embodiment 2 will be omitted from the description and drawings as necessary.

FIG. 18 illustrates an example of a GUI used for the modification of the target region and the threshold surface area size according to a variation of Embodiment 2. Here, the candidate target regions and the candidate threshold surface area sizes are displayed along with the print image.

The GUI illustrated in FIG. 18 differs from the GUIs illustrated FIG. 15 through FIG. 17 according to Embodiment 2 in that the GUI illustrated in FIG. 18 includes drop-down list 1801 and buttons 1802 through 1804.

The drop-down list 1801 is a component for selecting a set of the target region and the threshold surface area size from among a plurality of sets of the candidate target regions and the candidate threshold surface area sizes. In other words, the input unit 202 receives, via the drop-down list 1801, and input of a selection of the target region and the threshold surface area size from among the displayed candidate target regions and candidate threshold surface area sizes.

The initial value (default value) in the drop-down list 1801 is, for example, a predetermined setting (for example, setting 1). Moreover, for example, the initial value in the drop-down list 1801 may be a frequently selected setting. In this case, display of a candidate target region frequently selected from among the candidate target regions is prioritized.

For example, the user selects "setting 2" from the drop-down list displayed upon touching or clicking the drop-down list 1801. Then, as illustrated in FIG. 18, the target region (boundary lines 1502a through 1502d) and threshold surface area size (1503) indicated by the target region information and the threshold surface area size information corresponding to the selected setting "setting 2" is displayed along with the print image 1501.

Just like in Embodiment 2, the user can input modifications for the displayed target region (boundary lines 1502a through 1502d) and threshold surface area size (1503). In order to modify the target region information and the threshold surface area size information based on the input, the user touches or clicks button 1802. Alternatively, the user can reselect a different setting using the drop-down list 1801.

In order to continue with the printing process using the displayed target region and threshold surface area size, the user touches or clicks button 1803. Alternatively, in order to cancel the displayed target region and threshold surface area size, the user touches or clicks button 1804.

As described above, according to this variation, it is possible to select a target region from among candidate target regions. Thus, the user can easily select a target region from among candidate target regions.

Further, according to this variation, the candidate target regions can be displayed along with the print image. Therefore, the user can visually check the print image and the candidate target regions, making it possible to select a target region suitable for the print image and thus efficiently reduce wasteful printing even further.

Further, according to this variation, display of a frequently selected target region among the candidate target regions can be prioritized. Accordingly, the user can efficiently select a target region.

### Embodiment 3

Next, Embodiment 3 will be described. Embodiment 3 differs from Embodiments 1 and 2 in that a plurality of blank regions are detected in a plurality of print images, and a target region is selected from among the detected blank regions. Hereinafter, the printer according to this embodiment will be described with reference to the drawings. Note that in this embodiment, in order to avoid redundant description, configurations that are essentially the same as in Embodiments 1 and 2 will be omitted from the description and drawings as necessary.

### (Printer Configuration)

FIG. 19 is a block diagram illustrating the functional configuration of a printer 300 according to Embodiment 3. As illustrated in FIG. 19, the printer 300 includes a control unit 301, an input unit 302, a display unit 303, the reading unit 104, the printing unit 105, and the storage unit 106.

The control unit 301 detects blank regions in print images. For example, for each print image, the control unit 301 detects, as a blank region, a region larger than a predetermined size and constituted by adjacent pixels whose density values indicate white. Note that a blank region may be detected by any given method and is not particularly limited to a specific method.

Similar to the control unit 101 described in Embodiment 1, the control unit 301 determines whether a target region of a print image is blank.

The display unit 303 displays the detected blank regions. More specifically, the display unit 303 displays the print images along with their detected blank regions. Moreover, similar to the display unit 103 described in Embodiment 1, the display unit 303 displays information indicating the print image when the control unit 201 determines that the target region of the print image is blank.

The input unit 302 receives an input of a selection of a target region from among the blank regions.

### (Processes Performed by Printer)

Next, processes performed by the printer 300 configured as described above will be described in detail. FIG. 20 is a flow chart illustrating the printing process performed by the printer 300 according to Embodiment 3. FIG. 21 illustrates examples of detected blank regions according to Embodiment 3. FIG. 22 illustrates an example of a GUI used for selecting the target region according to Embodiment 3.

As illustrated in FIG. 20, first, the reading unit 104 reads images (S111). This generates a plurality of print images.

The control unit 301 detects blank regions in the print images (S302). For example, the control unit 301 does not detect a blank region in the print image labeled as page 1 in (a) in FIG. 21. Moreover, for example, the control unit 301 detects blank regions A and B in the print image labeled as page 2 in (b) in FIG. 21. Moreover, for example, the control unit 301 detects blank region C in the print image labeled as page 3 in (c) in FIG. 21.

The display unit 303 displays the detected blank regions (S303). For example, as illustrated in FIG. 22, the display unit 303 displays, along with selected print image 2201 labeled as page 3, the blank region C (the region shaded by hatching) detected in the print image 2201. The GUI illustrated in FIG. 22 will be described in detail later.

The input unit 302 receives an input of a selection of a target region from among the blank regions, and the control unit 301 selects a target region from among the blank regions based on the input (S304). For example, blank region C is selected by the user.

Next, loop processing is performed on the print images (S305, S309). In other words, the print images are sequentially selected, and the following processes are performed on the currently selected print image.

First, the control unit 301 determines whether the target region in the print image is a blank region (S306). For example, the control unit 301 determines whether the target region selected in step S304 and the blank region detected in the print image in step S302 match. For example, when the blank region C is selected as the target region, since the target region (blank region C) and the blank regions A and B detected in the print image labeled as page 2 do not match, the control unit 301 determines that the target region in the print image labeled as page 2 is not a blank region. However, since the target region (blank region C) and the blank region C detected in the print image labeled as page 3 do match, the control unit 301 determines that the target region in the print image labeled as page 3 is a blank region.

Here, when the control unit 301 determines that the target region is a blank region (yes in S306), the control unit 301 stores information indicating the print image (S307). However, when the control unit 301 determines that the target region is not a blank region (no in S306), the control unit 301 causes the printing unit 105 to print the print image (S308).

Once the loop of processes from step S305 to step S309 is complete, the display unit 303 displays information indicating print images stored in step S307 (S310). In other words, the display unit 303 displays information indicating print images whose target regions were determined to be blank regions. For example, similar to Embodiment 1, the display unit 303 displays the information illustrated in FIG. 10.

Next, the GUI illustrated in FIG. 22 will be described in detail.

The print image 2201 corresponding to the page number input in the text box 2202 and the blank region detected in the print image 2201 are displayed in the GUI. The page number in the text box 2202 can be increased or decreased by touching or clicking the right or left of the text box 2202. In FIG. 22, 3 (page 3) is input as the page number in text box 2202, whereby the print image 2201 labeled as page 3 and the blank region C are displayed.

The drop-down list 2203 is a component for selecting a target region. The user can touch or click the drop-down list 2203 and select a desired blank region from the displayed drop-down list as the target region.

The frame 2204 includes a group of components for adjusting the position of the target region. The user can move the blank region selected in the drop-down list 2203 using the group of components in the frame 2204.

The drop-down list 2205 is a component for selecting the target region information for saving the selected and adjusted target region in the GUI. The user can touch or click the drop-down list 2205 and select desired target region information from the displayed drop-down list.

The button 2206 is a component for saving the selected and adjusted target region in the GUI into the target region information selected from the drop-down list 2205.

The button 2207 is a component for instructing printing of the print images using the selected and adjusted target region.

### (Advantageous Effects)

As described above, according to this variation, it is possible to select a target region from among blank regions detected in print images. Therefore, when the print images include a print image that should not be printed, it is possible to select a target region appropriate for that print image. It is further possible to efficiently reduce wasteful printing by applying the target region selected in this manner to other print images.

### Embodiment 4

Next, Embodiment 4 will be described. In this embodiment, an image processing device for outputting information on a blank region will be described. Here, the information on the blank region that is output can be used for determining whether the target region is blank or not in Embodiments 1 through 3.

### (Image Processing Device Configuration)

FIG. 23 is a block diagram illustrating the functional configuration of an image processing device 10 according to Embodiments 4 and 5. The reference signs in the parentheses in FIG. 23 correspond to Embodiment 5.

The image processing device 10 according to this embodiment obtains an image and outputs information on a blank region included in the obtained image. The image processing device 10 may be realized as, for example, a generic processor and memory, or as an electronic circuit dedicated for image processing. The image processing device 10 includes an identifying unit 11, a coupling unit 12, and an output unit 13.

The identifying unit 11 identifies a blank region in each pixel line included in the print image based on a density level of each pixel included in the pixel line. For example, in a pixel line, the identifying unit 11 identifies the region from the 2^{nd} pixel to the 10^{th} pixel as a blank region. Here, the "2^{nd}" and "10^{th}" pixels refer to positions in the order in which the pixels are arranged.

A "pixel line" means a single line of pixels extending in one direction. The line direction in which the pixels are arranged does not particularly need to be limited, and is, for example, a horizontal, vertical, or diagonal direction.

The blank region is a region white in color. The blank region may include a region that is a predetermined color that is approximately white. In other words, the blank region is a region including pixels whose density levels are less than a predetermined density level.

Density level indicates the denseness of color (including black). Here, the higher the density level is, the darker the color is. Note that the density level may be represented in terms of luminosity. In such a case, the higher the luminance is, the lower the density level is.

The identifying unit 11 identifies a blank region in a first pixel line including, in the listed order, a first pixel, a second pixel, and a third pixel adjacent to the second pixel.

First, the identifying unit 11 identifies the position of the first pixel as the start position of a blank region in the first pixel line when the density level of the first pixel is less than a threshold level. Then, the identifying unit 11 identifies the position of the second pixel as the end position of the blank region in the first pixel line when the density level of the second pixel is within a predetermined range (a first predetermined range) for the second pixel and the density level of the third pixel is outside a predetermined range (a second predetermined range) for the third pixel.

The threshold level indicates an upper limit for density levels appropriate for a pixel located at the start position of a blank region. The threshold level may be predetermined empirically or by way of experiment.

The predetermined range indicates a range of density levels appropriate for pixels included in a blank region. In other words, the predetermined range indicates a permissible variation in density level for pixels included in a blank region. In this embodiment, the predetermined range is a range of plus or minus a predetermined density level of the density level of the first pixel. For example, when the density level of the first pixel is 3 and the predetermined density level is 2, the predetermined range is from 1 (= 3 - 2) to 5 (= 3 + 2).

The start and end positions of a blank region are the positions of pixels on the ends of the blank region in the line direction in which the pixels are arranged in the pixel line. In other words, the start position of a blank region is the position of the first pixel in the processing order in the blank region, and the end position of the blank region is the position of the last pixel in the processing order in the blank region. For example, when the pixels in a pixel line are processed form left to right, the start position of the blank region is the position of the leftmost pixel in the blank region, and the end position of the blank region is the position of the rightmost pixel in the blank region.

The coupling unit 12 couples adjacent blank regions among the blank regions identified in the pixel lines. In this embodiment, the coupling unit 12 couples, among the identified blank regions in the pixel lines, adjacent blank regions whose start and end positions match in the line direction in which the pixels are arranged.

The output unit 13 outputs information on blank regions in the print image based on the coupling result by the coupling unit 12. In this embodiment, the output unit 13 outputs, as information on a blank region in the image, information indicating the start and end positions of the coupled blank region coupled by the coupling unit 12, where the start position is located in the blank region in one of two pixel lines located at the borders of the blank region, and the end position is located in the blank region in the other of the two pixel lines. In other words, when pixel lines are coupled to form a single rectangular blank region, the output unit 13 outputs information indicating the positions of the pixels in diagonally opposing corners of the rectangle.

### (Processes Performed by Image Processing Device)

Next, processes performed by the image processing device 10 configured as described above will be described in detail. FIG. 24 is a flow chart illustrating the processes performed by the image processing device 10 according to Embodiments 4 and 5. Hereinafter, in an image composed of m x n pixels, position along the horizontal axis is represented as Xi (where i is an integer from 0 to m - 1) and position along the vertical axis is represented as Yj (where j is an integer from 0 to n - 1). Moreover, in this example, the pixel line is a pixel row in which the pixels are aligned horizontally.

First, loop processing is performed on the pixel lines (S11, S16). In other words, each pixel line Yj is selected sequentially and one at a time from among the pixel lines, and the following processes are performed on the currently selected pixel line Yj.

The identifying unit 11 identifies a blank region in the pixel line Yj (S12). This process will be described in detail later with reference to FIG. 25.

The coupling unit 12 determines whether the horizontal position of the blank region in the pixel line Yj matches the horizontal position of the blank region in the pixel line Yj - 1 (S13). In other words, the coupling unit 12 determines whether the horizontal start and end positions of the blank region in the pixel line Yj match the horizontal start and end positions of the blank region in the pixel line Yj - 1.

Here, when the coupling unit 12 determines that the horizontal position of the blank region in the pixel line Yj matches the horizontal position of the blank region in the pixel line Yj - 1 (yes in S13), the coupling unit 12 couples the two blank regions (S14). In other words, the coupling unit 12 merges the two blank regions to form a single blank region. For example, the coupling unit 12 updates the information indicating the end position of the blank region corresponding to pixel line Yj - 1 from (Xend, Yj - 1) to (Xend, Yj).

However, when the coupling unit 12 determines that the horizontal position of the blank region in the pixel line Yj does not match the horizontal position of the blank region in the pixel line Yj - 1 (no in S13), the coupling unit 12 stores the blank region corresponding to the pixel line Yj in distinction from the blank region corresponding to the pixel line Yj - 1 (S15). For example, the coupling unit 12 stores (Xstart, Yj) and (Xend, Yj), which is information indicating the start and end positions of a blank region in the pixel line Yj, as new blank region information in the memory.

Once the loop processing between steps S11 and S16 is complete, the output unit 13 outputs information on the blank region (S17). In other words, after processing for pixel lines from pixel line Y0 to pixel line Ym - 1 is complete, the output unit 13 outputs information on the identified blank regions.

Next, the process in step S12 for identifying a blank region will be described in detail with reference to FIG. 25. FIG. 25 is a flow chart illustrating the blank region identification process performed by the image processing device 10 according to Embodiment 4 in detail.

First, loop processing is performed on the pixels in the pixel line Yj (S21, S28). In other words, each pixel (Xi, Yj) is selected sequentially and one at a time from among the pixels in the pixel line Yj, and the following processes are performed on the currently selected pixel (Xi, Yj).

The identifying unit 11 determines whether the start position of a blank region in the pixel line Yj has already been identified (S22). More specifically, the identifying unit 11 determines whether Xstart, which is the horizontal start position of a blank region, is already identified.

When no start position has already been identified (no in S22), the identifying unit 11 determines whether the density level D (Xi, Yj) of the pixel (Xi, Yj) is less than the threshold level Dth (S23). Here, when D (Xi, Yj) is less than Dth (yes in S23), the identifying unit 11 identifies the position of the pixel (Xi, Yj) as the start position of a blank region in the pixel line Yj (S24). In other words, the identifying unit 11 identifies the horizontal start position Xstart of the blank region as Xi. However, when D (Xi, Yj) is greater than or equal to Dth (no in S23), the start position of the blank region is not identified, and processing returns to the loop processing.

When the start position has already been identified (yes in S22), the identifying unit 11 determines whether the end position of the blank region in the pixel line Yj has already been identified (S25). More specifically, the identifying unit 11 determines whether Xend, which is the horizontal end position of a blank region, is already identified. When the end position has already been identified (yes in S25), the end position of the blank region is not identified, and processing returns to the loop processing.

When no end position has already been identified (no in S25), the identifying unit 11 determines whether the density level D (Xi, Yj) of the pixel (Xi, Yj) is within the range R1 (S26). The range R1 is a range of plus or minus the predetermined density level Dpd of the density level D (Xstart, Yj) of the pixel in the start position of the blank region. In other words, the range R1 is from D (Xstart, Yj) - Dpd to D (Xstart, Yj) + Dpd.

When D (Xi, Yj) is not within R1 (no in S26), the identifying unit 11 identifies the position of the pixel (Xi - 1, Yj) directly before the pixel (Xi, Yj) as the end position of the blank region (S27). In other words, the identifying unit 11 identifies the horizontal end position Xend of the blank region as Xi - 1. When D (Xi, Yj) is within R1 (yes in S26), the end position of the blank region is not identified, and processing returns to the loop processing.

Next, the above processing will be described with reference to a specific image.

FIG. 26A illustrates an example of an image for illustrating processes performed by the image processing device according to Embodiment 4. FIG. 26B illustrates an example of density levels in an image for illustrating processes performed by the image processing device according to Embodiment 4. FIG. 26A and FIG. 26B depict the same image.

The rectangular blocks in FIG. 26A and FIG. 26B represent pixels. For example, when the image has a resolution of 600 dpi, each side of the pixel is 0.042 mm long (≈ 25.4 mm (1 in) / 600 dots). Moreover, each value in each pixel in FIG. 26B represents a density level of that pixel. Here, the density level is represented as one of 256 integer values, where 0 represents the lowest density and 255 represents the highest density. In other words, in the case of a grayscale image, 0 represents white and 255 represents black.

Hereinafter, an example will be presented in which the threshold level Dth is 3 and the predetermined density level Dpd is 2.

First, the identifying unit 11 performs the blank region identification process on the pixel line Y0 (S12). Here, all of the pixels in the pixel line Y0 are above the threshold level of 3. The identifying unit 11 therefore cannot determine the start position of a blank region. In other words, no blank region is identified in the pixel line Y0. As a result, no blank region is saved for the pixel line Y0 (S15).

Next, the identifying unit 11 performs the blank region identification process on the pixel line Y1 (S12). Here, the density level of the pixel (X1, Y1) corresponding to the first pixel is 0, which is less than the threshold level of 3 (yes in S23). The identifying unit 11 therefore identifies the position of the pixel (X1, Y1) as the start position of a blank region (S24). In other words, the identifying unit 11 identifies the horizontal start position Xstart of a blank region as X1.

The density level of each pixel from the pixel (X1, Y1) to the pixel (Xm - 2, Y1) corresponding to the second pixel is 0, which is within the range R1 defined as plus or minus the predetermined density level 2 of the density level 0 of the start position pixel (yes in S26). However, the density level of the pixel (Xm - 1, Y1) corresponding to the third pixel is 255, which is outside the range R1 defined as a range of plus or minus the predetermined density level 2 of the density level 0 of the start position pixel (no in S26). The identifying unit 11 therefore identifies the position of the pixel (Xm - 2, Y1) as the end position of the blank region (S27). In other words, the identifying unit 11 identifies the horizontal end position Xend of the blank region as Xm - 2.

Since the pixel line Y0 does not include a blank region (no in S13), the coupling unit 12 stores the start position (X1, Y1) and the end position (Xm - 2, Y1) of the blank region in pixel line Y1 (S15).

Next, the identifying unit 11 performs the blank region identification process on the pixel line Y2 (S12). Just as with pixel line Y1, the start position (X1, Y2) and the end position (Xm - 2, Y2) of a blank region are identified in pixel line Y2. Here, since the horizontal position of the blank region in the pixel line Y2 matches the horizontal position of the blank region in the pixel line Y1 (yes in S13), the coupling unit 12 couples the blank region in the pixel line Y2 and the blank region in the pixel line Y1. For example, the coupling unit 12 updates the end position stored for the blank region in pixel line Y1 from (Xm - 2, Y1) to (Xm - 2, Y2).

Pixel lines Y3 to Yn - 2 are processed in the same manner as pixel line Y2. In other words, the blank regions identified in pixel lines Y3 to Yn - 2 are each coupled with the stored blank region. Similar to pixel line Y0, no blank region is identified in the final pixel line Yn - 1.

The blank region 21 is identified as a result of the processes described above. The output unit 13 outputs information on the blank region 21 (S17). More specifically, the output unit 13 outputs, as information on a blank region in the image, information indicating the start position (X1, Y1) and end position (Xm - 2, Yn - 2) of the coupled blank region 21 coupled by the coupling unit 12, where the start position (X1, Y1) is located in the blank region in one of the two pixel lines Y1 and Yn - 2 located at the borders of the blank region, and the end position (Xm - 2, Yn - 2) is located in the blank region in the other of the two pixel lines Y1 and Yn - 2. In other words, the output unit 13 outputs information indicating the positions of the pixels in diagonally opposing corners of the blank region 21.

Next, the processing described above will be further described with reference to an image different from the image illustrated in FIG. 26A and FIG. 26B.

FIG. 27A illustrates another example of an image for illustrating processes performed by the image processing device according to Embodiment 4. FIG. 27B illustrates another example of density levels in an image for illustrating processes performed by the image processing device according to Embodiment 4. FIG. 27A and FIG. 27B depict the same image.

Pixel lines Y0 to Yn - 4 are the same as the image illustrated in FIG. 26A and FIG. 26B, and as such, description is omitted. The identifying unit 11 identifies the start position (X3, Yn - 3) and the end position (Xm - 2, Yn - 3) of a blank region in the pixel line Yn - 3 (S12). Here, since the horizontal position of the blank region in the pixel line Yn - 3 does not match the horizontal position of the blank region in the pixel line Yn - 4 (no in S13), the coupling unit 12 stores the start position (X3, Yn - 3) and the end position (Xm - 2, Yn - 3) of the blank region in the pixel line Yn - 3 as information indicating a new blank region (S15).

Next, the identifying unit 11 identifies the start position (X3, Yn - 2) and the end position (Xm - 2, Yn - 2) of a blank region in the pixel line Yn - 2 (S12). Here, since the horizontal position of the blank region in the pixel line Yn - 2 matches the horizontal position of the blank region in the pixel line Yn - 3 (yes in S13), the coupling unit 12 couples the blank region in the pixel line Yn - 2 and the blank region in the pixel line Yn - 3.

Two blank regions 22 and 23 are identified as a result of the processes described above. The output unit 13 outputs information on the blank regions 22 and 23 (S17). More specifically, the output unit 13 outputs, as information on blank regions in the image, information indicating the positions (X1, Y1) and (Xm - 2, Yn - 4) of the pixels in diagonally opposing corners of the blank region 22, and information indicating the positions (X3, Yn - 3) and (Xm - 2, Yn - 2) of the pixels in diagonally opposing corners of the blank region 23.

### (Advantageous Effects)

As described above, with the image processing device 10 according to this embodiment, it is possible to identify the start and end positions of a blank region in a pixel line based on density levels in the image. It is further possible to output information on blank regions in the image by coupling the identified adjacent blank regions among the pixel lines. Therefore, compared to when a blank region is identified using predetermined blocks, blank regions can be identified with flexibility in regard to shapes and sizes, whereby blank regions in the image can be identified with high precision.

Moreover, with the image processing device 10 according to this embodiment, pixels having a density level within a range of plus or minus a predetermined density level of the density level of the first pixel, which is the start position pixel of the blank region, can be included in the blank region. Therefore, pixels having a density level far from the density level of the first pixel can be prevented from being included in a blank region, and a region having a substantially homogenous density level can be identified as a blank region.

Moreover, with the image processing device 10 according to this embodiment, it is possible to couple identified adjacent blank regions whose start and end positions match in the line direction in which the pixels are arranged and identify a rectangular blank region. Therefore, it is possible to identify a blank region using diagonally opposing corners of a rectangular region. As a result, it is possible to output, as information on a blank region in the image, information indicating the start and end positions of the blank region, where the start position is located in the blank region in one of two pixel lines located at the borders of the blank region, and the end position is located in the blank region in the other of the two pixel lines.

### Embodiment 5

Next, Embodiment 5 will be described. In this embodiment, an image processing device capable of identifying a region as a blank region even when the region includes a color other that white will be described. Note that in this embodiment, in order to avoid redundant description, configurations that are essentially the same as in Embodiment 4 will be omitted from the description and drawings as necessary.

### (Image Processing Device Configuration)

As illustrated in FIG. 23, the image processing device 10A according to this embodiment is similar to the image processing device 10 according to Embodiment 4, but differs in that it includes identifying unit 11A instead of the identifying unit 11.

Similar to the identifying unit 11, the identifying unit 11A identifies a blank region in each pixel line included in an image based on a density level of each pixel included in the pixel line.

The identifying unit 11A identifies a blank region in a first pixel line including, in the listed order, a first pixel, a second pixel, and a third pixel adjacent to the second pixel, as follows.

First, the identifying unit 11A identifies the position of the first pixel as the start position of a blank region in the first pixel line when the density level of the first pixel is less than a threshold level. The identifying unit 11A also identifies the position of the first pixel as the start position of a blank region in the first pixel line when a predetermined number of sequential pixels including and starting from the first pixel have the same density level, even when the density level of the first pixel is greater than or equal to the threshold level.

The predetermined number is a number for evaluating the continuousness of the density level. The predetermined number may be predetermined empirically or by way of experiment.

Then, the identifying unit 11A identifies the position of the second pixel as the end position of the blank region in the first pixel line when the density level of the second pixel is within a predetermined range (a first predetermined range) for the second pixel and the density level of the third pixel is outside a predetermined range (a second predetermined range) for the third pixel.

The predetermined range indicates a range of density levels appropriate for pixels included in a blank region. In other words, the predetermined range indicates a permissible variation in density level for pixels included in a blank region. In this embodiment, the predetermined range is a range of plus or minus a predetermined density level of the density level of an adjacent pixel. For example, when the density level of the second pixel is 3 and the predetermined density level is 2, the predetermined range for the third pixel is from 1 (= 3 - 2) to 5 (= 3 + 2).

The identifying unit 11A further determines whether an average density level of pixels included in the blank region in the first pixel line is greater than the threshold level, and determines whether a difference between the highest density level and the lowest density level among the pixels included in the blank region in the first pixel line is greater than a threshold difference. Here, the identifying unit 11A cancels the identification of the blank region in the first pixel line when the average density level is greater than the threshold level and the difference is greater than the threshold difference.

The threshold difference is a value for evaluating variations in density level in a blank region. The threshold difference may be predetermined empirically or by way of experiment.

### (Processes Performed by Image Processing Device)

Next, processes performed by the image processing device 10A configured as described above will be described in detail. In this embodiment, as illustrated in FIG. 24, the blank region identification process (S12A) is different from the blank region identification process (S12) according to Embodiment 4. Hereinafter, the blank region identification process performed by the image processing device 10A according to this embodiment will be described in detail.

FIG. 28 is a flow chart illustrating the blank region identification process performed by the image processing device 10A according to Embodiment 5 in detail. In FIG. 28, processes which are essentially the same as those in FIG. 25 share like reference signs, and description thereof is omitted where appropriate.

When the density level D (Xi, Yj) of the pixel (Xi, Yj) is greater than or equal to the threshold level Dth (no in S23), the identifying unit 11A determines whether the density level D (Xi, Yj) continues sequentially for a predetermined number of pixels starting from the pixel (Xi, Yj) (S31). In other words, the identifying unit 11A determines whether D (Xi, Yj) = D (Xi + 1, Yj) = D (Xi + 2, Yj)...is satisfied.

Here, when the density level D (Xi, Yj) continues sequentially for a predetermined number of pixels starting from the pixel (Xi, Yj) (yes in S31), the identifying unit 11A identifies the position of the pixel (Xi, Yj) as the start position of a blank region in the pixel line Yj (S24). However, when the density level D (Xi, Yj) does not continue sequentially for a predetermined number of pixels starting from the pixel (Xi, Yj) (no in S31), a blank region start position is not identified, and processing returns to the loop processing.

When no blank region end position has already been identified (no in S25), the identifying unit 11A determines whether the density level D (Xi, Yj) of the pixel (Xi, Yj) is within the range R2 (S32). The range R2 is a range of plus or minus a predetermined density level Dpd of the density level D (Xi - 1, Yj) of an adjacent pixel. In other words, R2 is a range from D (Xi - 1, Yj) - Dpd to D (Xi - 1, Yj) + Dpd.

Here, when D (Xi, Yj) is within R2 (yes in S32), the end position of the blank region is not identified, and processing returns to the loop processing. However, when D (Xi, Yj) is within R2 (no in S32), the identifying unit 11A identifies the position of the pixel (Xi - 1, Yj) directly before the pixel (Xi, Yj) as the end position of the blank region (S27).

Then, the identifying unit 11A calculates the average density level Dmean of pixels included in the identified blank region, and determines whether Dmean is greater than Dth (S33). Here, when Dmean is less than or equal to Dth (no in S33), processing returns to the loop process. However, when Dmean is greater than Dth (yes in S33), the identifying unit 11A calculates the highest density level Dmax and the lowest density level Dmin of pixels included in the identified blank region, and determines whether the difference is greater than the threshold difference Df (S34). Here, when the difference between Dmax and Dmin is less than or equal to Df (no in S34), the processing returns to the loop process. However, when the difference between Dmax and Dmin is greater than Df (yes in S34), the identifying unit 11A cancels the identification of the blank region in the pixel line Yj (S35).

Next, the above processing will be described with reference to a specific image.

FIG. 29A illustrates an example of an image for illustrating processes performed by the image processing device according to Embodiment 5. FIG. 29B illustrates an example of density levels in an image for illustrating processes performed by the image processing device according to Embodiment 5. FIG. 29A and FIG. 29B depict the same image.

Hereinafter, an example will be presented in which the threshold level Dth is 3, the predetermined density level Dpd is 2, the number for determining the continuousness of the density level is 3, and the threshold difference Df is 5. Moreover, the description will focus on the points of differences from FIG. 26A and FIG. 26B.

After performing the blank region identification process on the pixel line Y0, the identifying unit 11A performs the blank region identification process on the pixel line Y1 (S12). Here, the density level of the pixel (X1, Y1) corresponding to the first pixel is 5, which is greater than the threshold level of 3 (yes in S23). However, the density level 5 of the pixel (X1, Y1) continues sequentially for three or more pixels starting from the pixel (X1, Y1) (yes in S31). The identifying unit 11A therefore identifies the position of the pixel (X1, Y1) as the start position of a blank region (S24). In other words, the identifying unit 11A identifies the horizontal start position Xstart of a blank region as X1.

The density level 5 of the pixel (Xm - 2, Y1) corresponding to the second pixel is within the range R2 defined as plus or minus the predetermined density level 2 of the density level 5 of the adjacent pixel (Xm - 3, Y1) (yes in S26). However, the density level of the pixel (Xm - 1, Y1) corresponding to the third pixel is 255, which is outside the range R2 defined as plus or minus the predetermined density level 2 of the density level 5 of the adjacent pixel (Xm - 2, Y1) (no in S26). The identifying unit 11A therefore identifies the position of the pixel (Xm - 2, Y1) as the end position of the blank region (S27). In other words, the identifying unit 11A identifies the horizontal end position Xend of the blank region as Xm - 2.

Here, the identifying unit 11A calculates the average density level 5 of the pixels in the identified blank region. The calculated average density level 5 is greater than the threshold level 3 (yes in S33). Here, the identifying unit 11A calculates the difference between the highest density level and the lowest density level of the pixels in the identified blank region. Here, since the highest and lowest density levels are both 5, a difference of 0 is calculated. Since a difference of 0 is less than or equal to the threshold difference 5 (no in S34), the identification of the blank region in the pixel line Y1 is not canceled.

The blank region 24 is identified as a result of the processes described above. The output unit 13 outputs information on the blank region 24 (S17).

### (Advantageous Effects)

With the image processing device 10A according to this embodiment, pixels having a density level within a range of plus or minus a predetermined density level of the density level of an adjacent pixel can be included in the blank region. This makes it possible to prevent pixels that differ greatly from an adjacent pixel in density level from being included in the blank region. Stated differently, this makes it possible to identify a region of pixels whose density levels gradually change in the line direction in which the pixels are arranged in the pixel line as a blank region, thereby making it possible to increase the variations of the blank region. For example, in an image whose background includes a gradation, the background region can be identified as a blank region.

Moreover, with the image processing device 10A according to this embodiment, it is possible to identify the position of a pixel as the start position of a blank region when a predetermined number of sequential pixels including and starting from the pixel have the same density level. Therefore, a region having a substantially homogenous density level can be identified as a blank region even if the region includes a pixel whose density level is greater than or equal to the threshold level. For example, in an image having a gray or yellow background, a region including sequential gray or yellow pixels can be identified as a blank region in addition to a region of white pixels.

Moreover, with the image processing device 10A according to this embodiment, the identification of a blank region can be canceled when the average density level is greater than the threshold level and the difference between the highest and lowest density levels is greater than the threshold difference. This makes it possible to identify a region whose density level is not homogenous as a blank region.

### Embodiment 6

In this embodiment, an example in which the printer according to Embodiment 1 and the image processing device according to Embodiment 4 or 5 are combined will be described in detail with reference to the drawings. Note that in this embodiment, in order to avoid redundant description, configurations that are essentially the same as in Embodiments 1, 4 and 5 will be omitted from the description and drawings as necessary.

### (Printer Configuration)

FIG. 30 is a block diagram illustrating the functional configuration of a printer 400 according to Embodiment 6. As illustrated in FIG. 30, the printer 400 includes a control unit 401, the input unit 102, the display unit 103, the reading unit 104, the printing unit 105, the storage unit 106, and the image processing device (image processing unit) 10 or 10A. Hereinafter, each element in the printer 400 will be described in detail.

The control unit 401 is realized as, for example, a generic processor or a dedicated electronic circuit. The control unit 401 is also referred to as a controller. The control unit 401 executes or cancels the printing of a print image in accordance with the print image.

In this embodiment, the control unit 401 determines whether a target region of a print image is blank based on information on a blank region output from the image processing device 10 or 10A. The control unit 401 then controls the printing unit 105 based on the result of the determination.

More specifically, the control unit 401 obtains information on the blank region from the image processing device 10 or 10A. The control unit 401 then compares the surface area size of the blank region identified in the target region in the obtained information with a threshold surface area size to determine whether the target region is blank. In other words, when the surface area size of the blank region in the target region is greater than or equal to the threshold surface area size, the control unit 401 determines that the target region is blank. In contrast, when the surface area size of the blank region in the target region is less than the threshold surface area size, the control unit 401 determines that the target region is not blank.

### (Advantageous Effects)

As described above, with the present embodiment, it is possible to realize the printer 400, which is a combination of Embodiment 1 and Embodiment 4 or 5. This makes it possible to precisely identify a blank region in a print image and determine whether a region (target region), which is a portion of the print image, is blank based on the identified blank region. In other words, determination of whether the target region is blank or not can be performed appropriately and wasteful printing can be further efficiently reduced.

### Other Embodiments

Although the printer according to one or more aspect of the present invention has been described based on embodiments, these embodiments are not limiting. Accordingly, various modifications of the embodiments as well as embodiments resulting from combinations of elements of different embodiments that are conceivable by those skilled in the art are intended to be included within the scope of one or more aspect of the present invention as long as these do not depart from the essence of the present invention.

For example, Embodiment 2 or 3 may be combined with the variation of Embodiment 1. In other words, a number of processes in Embodiment 2 or 3 may be performed by the information terminal.

Moreover, in Embodiment 6, Embodiment 1 is combined with Embodiment 4 or 5, but Embodiment 2 or 3 and Embodiment 4 or 5 and the variation of Embodiment 1 may be arbitrarily combined.

Moreover, in Embodiments 1 and 2, whether the target region is blank is determined using a threshold surface area size, but use of a threshold surface area size is not necessary. For example, whether the entire target region is the blank region may be determined.

Moreover, in Embodiments 1 and 2, the threshold surface area size is represented as the width and height of a rectangle, but this example is not limiting. For example, the threshold surface area size may be represented as a proportion (for example 90%) of the target region. Such a proportion may be predetermined and, alternatively, may be set according to an input from the user.

Moreover, in the above embodiments, information indicating which print images were canceled from being printed is displayed, but this example is not limiting. For example, such information need not be displayed to the user. Moreover, such information may be printed.

Moreover, the setting of the target region may be automated. For example, the target region may be set in advance as a region corresponding to a plurality of characters starting from the top left, excluding the blank region in the print image. Word processing software typically employs a horizontal text layout where text is written from the top left. Accordingly, the blank region can be efficiently determined in the majority of cases. Moreover, the target region may be set in advance as a region corresponding to a plurality of lines starting from the top left rather than a plurality of characters. Moreover, for example, the target region may be set in advance to a given range from the center of the print image to a plurality of characters starting from the top left, excluding the empty region in the print image, excluding the blank region. In documents generated using presentation creation software, text or other content is typically located in the central region. Accordingly, the blank region can be efficiently determined in the majority of cases. Moreover, for example, the method of setting the target region in the top left described above and the method of setting the given range from the center described above may be combined. Moreover, for example, when a plurality of print images are to be printed, the plurality of print images may be compared to identify regions including the same data, and all regions other than those identified may be set as the target region.

Moreover, in the above embodiments, the information indicating which print images were canceled from being printed includes date and time of cancellation and page number information, but this example is not limiting. For example, the information indicating the print images may include only either date and time or page number information. Moreover, for example, when a print image or images are transmitted from the information terminal to the printer, the information indicating the print image or images may include identification information on the information terminal and a file name of the print image or images.

Moreover, the elements included in the printer may be included in one or more other devices connected via a communication path. For example, the printing unit and the reading unit may be included in the printer, the input unit and the display unit may be included in the information terminal, and the control unit and the storage unit may be included in a server device. More specifically, when the information terminal instructs printing, data is transmitted to the server device, blank pages are identified in the server device, and the printer performs the printing process so as to remove the blank pages. Note that the removal of the blank pages may be done by either the server device or the printer. Moreover, for example, the printer may include only the control unit and the printing unit and not include the input unit, the display unit and the reading unit.

Note that in Embodiments 4 and 5, the predetermined range for determining the end position of a blank region in a pixel line is defined by the density level of the pixel in the start position of the blank region or an adjacent pixel, but the predetermined range is not limited to this example. For example, the predetermined range may be defined by an average density level from the pixel in the start position of the blank region to an adjacent pixel. In other words, the predetermined range may be a range of plus or minus a predetermined density level of an average density level from a pixel in the start position of the blank region (i.e., the first pixel) to an adjacent pixel. With this configuration, pixels having a density level within a range of plus or minus a predetermined density level of an average density level from the first pixel to an adjacent pixel can be included in the blank region. Therefore, pixels having a density level far from the average density level can be prevented from being included in the blank region, and a region having a substantially homogenous density level can be identified as the blank region.

Note that in Embodiment 5, whether the difference between the highest and lowest density levels is greater than a threshold difference is determined, and identification of the blank region is canceled based on the determination result, but this is not limited to the difference between the highest and lowest density levels. In other words, the threshold difference is a value for evaluating variations in density level in a blank region. For example, the identifying unit may determine whether a ratio of pixels included in the blank region in a pixel line that have a density level equal to the density level of a pixel in the start position of the blank region (i.e., the first pixel) is less than a threshold ratio. In this case, the identifying unit may cancel the identification of a blank region in the pixel line when the average density level is greater than the threshold level and the ratio is less than the threshold ratio. This configuration makes it possible to prevent identification, as a blank region, of a region including many pixels having a density level different from the density level of the first pixel.

Note that in Embodiments 4 and 5, in the processes illustrated in FIG. 24, the pixel lines are processed in order one line at a time, but two lines may be processed in parallel.

Note that in Embodiments 4 and 5, among the identified blank regions in the pixel lines, adjacent blank regions whose start and end positions match in the line direction in which the pixels are arranged are coupled, but this example is not limiting. For example, blank regions 22 and 23, which have different start positions (see FIG. 27B), may be coupled. In other words, adjacent regions whose start positions only match, end positions only match, or both start and end positions match may be coupled.

Note that in Embodiments 4 and 5, the blank region is identified in a monochrome image, but the identification of the blank region may be applied to a color image. For example, the image processing device may identify blank regions in red, green, and blue images, and when the location and size of the blank regions in the red, green, and blue images match, may identify that blank region as a color image blank region. Moreover, the image processing device may identify an overlapping blank region in the red, green, and blue images as a color image blank region.

Note that in Embodiment 6, printing of an image is canceled based on a blank region identified in Embodiment 4 or 5, but the usage of the blank region is not limited to this example. For example, the blank region identified by the image processing device may be used to control the movement speed of the sensor upon reading the image, similar to PTL 2. Moreover, for example, the blank region identified by the image processing device may be used for identifying a region for optical character recognition (OCR).

### Industrial Applicability

The present invention can be applied as a printer and as a printing network including the printer.

### Reference Signs List

10, 10A image processing device
11, 11A identifying unit
12 coupling unit
13 output unit
21, 22, 23, 24 blank region
100, 100A, 200, 300, 400 printer
100B information terminal
101, 201, 301, 401 control unit
102, 202, 302 input unit
103, 203, 303 display unit
104 reading unit
105 printing unit
106 storage unit
107A, 107B communication unit
1201 button
1202, 1203, 2202 text box
1501, 2201 print image
1502a, 1502b, 1502c, 1502d boundary line
1503 rectangle
1504 cursor
1801, 2203, 2205 drop-down box
1802, 1803, 1804, 2206, 2207 button
2204 frame

## Claims

1. A printer, comprising:
a control unit that determines whether a target region of a print image is blank, the target region being a portion of the print image; and
a printing unit that cancels printing of the print image when the control unit determines that the target region is blank.

2. The printer according to claim 1, further comprising
a display unit that displays the target region along with the print image,
wherein the control unit modifies the displayed target region.

3. The printer according to claim 2, wherein
the display unit further displays candidate target regions, and
the control unit further selects the target region from among the displayed candidate target regions.

4. The printer according to claim 3, wherein
the display unit that displays the candidate target regions along with the print image.

5. The printer according to claim 3 or 4, wherein
the display unit prioritizes displaying a candidate target region frequently selected from among the candidate target regions.

6. The printer according to claim 1, wherein
the control unit further:
detects blank regions in a plurality of the print images; and
selects the target region from among the blank regions.

7. The printer according to any one of claims 1 to 6, wherein
the control unit determines whether the target region is blank by comparing a surface area size of a blank region detected in the target region with a threshold surface area size.

8. The printer according to claim 7, further comprising
a display unit that displays the threshold surface area size along with the print image,
wherein the control unit modifies the displayed threshold surface area size.

9. The printer according to any one of claims 1 to 8, further comprising
a display unit that displays information indicating the print image when the control unit determines that the target region is blank.

10. The printer according to claim 9, wherein
the information indicating the print image includes at least one of a date and time at which the printing of the print image was canceled and a page number of the print image.

11. The printer according to claim 1, further comprising
an image processing unit that processes the print image,
wherein the image processing unit includes:
an identifying unit that identifies a blank region in each pixel line included in the print image based on a density level of each pixel included in the pixel line;
a coupling unit that couples adjacent blank regions among the blank regions identified in the pixel lines; and
an output unit that outputs information on a blank region in the print image based on a coupling result by the coupling unit,
wherein the pixel lines include a first pixel line including, in the listed order, a first pixel, a second pixel, and a third pixel adjacent to the second pixel,
the identifying unit:
identifies a position of the first pixel as a start position of the blank region in the first pixel line when the density level of the first pixel is less than a threshold level; and
identifies a position of the second pixel as an end position of the blank region in the first pixel line when the density level of the second pixel is within a first predetermined range and the density level of the third pixel is outside a second predetermined range, and
the control unit determines whether the target region is blank based on the information on the blank region in the print image output by the image processing unit.

12. The printer according to claim 11, wherein
the first predetermined range and the second predetermined range are each a range of plus or minus a predetermined density level of the density level of the first pixel.

13. The printer according to claim 11, wherein
the first predetermined range is a range of plus or minus a predetermined density level of the density level of a pixel adjacent to the second pixel, and the second predetermined range is a range of plus or minus a predetermined density level of the density level of a pixel adjacent to the third pixel.

14. The printer according to claim 11, wherein
the first predetermined range is a range of plus or minus a predetermined density level of an average density level from the first pixel to a pixel adjacent to the second pixel, and the second predetermined range is a range of plus or minus a predetermined density level of an average density level from the first pixel to a pixel adjacent to the third pixel.

15. The printer according to any one of claims 11 to 14, wherein
the identifying unit further identifies the position of the first pixel as the start position of the blank region in the first pixel line when a predetermined number of sequential pixels including and starting from the first pixel have the same density level, even when the density level of the first pixel is greater than or equal to the threshold level.
